(19) Europäisches Patentamt
European Patent Office
Office européen des brevets

(11) **EP 2 514 677 B1**

(12) **EUROPÄISCHE PATENTSCHRIFT**

(45) Veröffentlichungstag und Bekanntmachung des Hinweises auf die Patenterteilung:
**26.11.2014 Patentblatt 2014/48**

(21) Anmeldenummer: **11182222.7**

(22) Anmeldetag: **21.09.2011**

(51) Int Cl.:
**B65B 9/02** *(2006.01)*  **B65G 47/31** *(2006.01)*
**B65B 57/14** *(2006.01)*  **B65B 51/30** *(2006.01)*
**B65B 9/067** *(2012.01)*

(54) **Verpackungsmaschine mit mitlaufender Quertrennschweißeinrichtung**

Packaging machine with moving longitudinal separation welding device

Machine d'emballage dotée d'un dispositif de soudage oblique continu

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2011 DE 102011018384**

(43) Veröffentlichungstag der Anmeldung:
**24.10.2012 Patentblatt 2012/43**

(73) Patentinhaber: **Beck Packautomaten GmbH & Co. KG**
**72636 Frickenhausen (DE)**

(72) Erfinder: **Gonser, Martin**
**72636 Frickenhausen (DE)**

(74) Vertreter: **Witte, Weller & Partner Patentanwälte mbB**
**Postfach 10 54 62**
**70047 Stuttgart (DE)**

(56) Entgegenhaltungen:
**EP-A1- 0 537 844  EP-A2- 2 103 521**
**WO-A1-96/31397  US-A- 4 537 016**

**Beschreibung**

Die vorliegende Erfindung betrifft eine Verpackungsmaschine zum Verpacken eines Packguts mit einer Umverpackung, mit einer Einlauftransporteinrichtung und einer Auslauftransporteinrichtung zum Transportieren des Packguts in einer Transportrichtung, mit einer Quertrennschweißeinrichtung zum Verschweißen der Umverpackung quer zu der Transportrichtung, mit zwei Längstrennschweißeinrichtungen zum Verschweißen der Umverpackung parallel zu der Transportrichtung, wobei die Quertrennschweißeinrichtung in der Transportrichtung vor den Längstrennschweißeinrichtungen angeordnet ist, wobei die Einlauftransporteinrichtung derart ausgebildet ist, dass sie das Packgut zu der Quertrennschweißeinrichtung hintransportiert, wobei die Auslauftransporteinrichtung derart ausgebildet ist, dass sie das Packgut von der Quertrennschweißeinrichtung wegtransportiert.

Des Weiteren betrifft die vorliegende Erfindung ein Verfahren zum Einstellen eines Abstandes zwischen aufeinanderfolgenden Packgütern, bei dem das Packgut in einer Transportrichtung transportiert wird, wobei das Packgut bezüglich der Transportrichtung nach einer Quertrennschweißeinrichtung zu zwei Längstrennschweißeinrichtungen transportiert wird, wobei das Packgut auf einer Einlauftransporteinrichtung zu der Quertrennschweißeinrichtung hintransportiert wird, und wobei das Packgut auf einer Auslauftransporteinrichtung von der Quertrennschweißeinrichtung wegtransportiert wird.

Eine derartige Verpackungsmaschine und ein derartiges Verfahren sind beispielsweise aus der Druckschrift DE 10 2006 001 594 A1 bekannt.

Verpackungsmaschinen werden in vielen industriellen Anwendungen zum Verpacken von unterschiedlichen Packgütern verwendet. Bei den Packgütern kann es sich um Konsumartikel wie beispielsweise Datenträger, Bücher oder übliche, in Supermärkten vertriebene Artikel handeln, aber auch um Sonderartikel wie beispielsweise Ersatzteile oder Baustoffe wie Ton. Auch bei Zeitschriften mit Beilegern oder im Bereich des Versandhandels finden Verpackungsmaschinen regelmäßig Anwendung.

Die vorliegende Erfindung beschäftigt sich mit Folienverpackungsmaschinen, bei denen grundsätzlich zwischen Formschultermaschinen, Serienpackmaschinen und Banderoliermaschinen unterschieden wird. Während Formschultermaschinen und Serienpackmaschinen dazu vorgesehen sind, ein Packgut vollständig in Folie einzuhüllen, wird mittels einer Banderoliermaschine lediglich eine Banderole um ein zu verpackendes Packgut gelegt.

Unter "Verpackungsmaschine" sind im Rahmen der vorliegenden Erfindung somit alle der voranstehend genannten Arten von Verpackungsmaschinen zu verstehen. Aufgrund ihrer Ausgestaltung beschäftigt sich die vorliegende Erfindung jedoch mit Serienpackmaschinen. Unter dem Begriff "Umverpackung" sind sowohl das Packgut vollständig einhüllende Folienverpackungen zu verstehen, die zum einen als Halbschläuche und zum anderen auch in Form von separaten Folien zugeführt werden können. Die vorliegende Erfindung beschäftigt sich jedoch mit aus einer oberen Folienbahn und einer unteren Folienbahn gebildeten und an allen vier Seiten des Packguts verschweißten Umverpackungen, wie sie in einer Serienpackmaschine erzeugt werden.

Allen Verpackungsmaschinen ist gemein, dass die Umverpackung an zumindest einer Seite verschweißt und abgetrennt werden muss. Für Banderolen ist dies in der Regel lediglich an einer Seite der Fall, bei Formschultermaschinen an drei Seiten und bei Serienpackmaschinen an allen vier Seiten des Packguts. Eine solche Serienpackmaschine zeigt etwa auch die eingangs genannte Druckschrift DE 10 2006 001 594 A1. Die vorliegende Erfindung beschäftigt sich daher mit Verpackungsmaschinen, die das Packgut an vier Seiten verschweißen.

Verpackungsmaschinen weisen stets eine sogenannte Quertrennschweißeinrichtung auf, die die Umverpackung quer zur Transportrichtung des Packguts in der Verpackungsmaschine verschweißt und zumindest teilweise durchtrennt. Des Weiteren weisen Verpackungsmaschinen Längsschweißeinrichtungen bzw. Längstrennschweißeinrichtungen auf, die die Umverpackung parallel zu der Transportrichtung des Packguts verschweißen und einen eventuell vorhandenen Folienüberstand abtrennen. Der Folienüberstand wird dann in der Regel mittels einer Folienrückführung aufgefangen und wiederverwertet.

In Bezug auf eine Transportrichtung des Packguts durch die Verpackungsmaschine ist dabei in der Regel bei einer Formschultermaschine die Längstrennschweißeinrichtung vor der Quertrennschweißeinrichtung bzw. stromauf der Quertrennschweißeinrichtung in Bezug auf die Transportrichtung angeordnet. Dies ist dort vorgesehen, um die die Umverpackung bildende Folie in der Längstrennschweißeinrichtung unbeschädigt verarbeiten zu können und diese ohne Einkerbungen an die Quertrennschweißeinrichtung heranzuführen. Durch die Anordnung der Längstrennschweißeinrichtung vor der Quertrennschweißeinrichtung eine Entlastung der Schweißnähte bei hohen Produkten an der Quertrennschweißeinrichtung möglich.

Bei einer Serienpackmaschine ist die Quertrennschweißeinrichtung vor der Längstrennschweißeinrichtung angeordnet, um in der an der Quertrennschweißeinrichtung entstehenden Stempellücke ein aus einer oberen Folienbahn und einer unteren Folienbahn gebildeten Folienvorhang bereitzustellen, in den das Packgut einfahren kann und sich bei seiner Durchfahrt durch den Folienvorhang abhängig von seiner Größe ein gewünschtes Maß an Folie von der oberen Folienbahn bzw. der unteren Folienbahn abnimmt.

Bei Folienverpackungsmaschinen kommt es häufig darauf an, wie viele einzelne Packgüter in einem bestimmten Zeitabschnitt verpackt werden können, die sogenannte Taktrate. Um diese Taktrate zu erhöhen, wurde für Formschultermaschinen im Stand der Technik verschiedentlich vorgeschlagen, die Quertrennschweißeinrichtung als sogenannte mitlaufende Quertrennschweißeinrichtung auszuführen. Unter einer mitlaufenden Quertrennschweißeinrichtung ist dabei eine Quertrennschweißeinrichtung zu verstehen, die parallel zu der Transportrichtung in einer Hin-und Her-Bewegung bewegt werden kann. Auf diese Weise wird ein kontinuierlicher Betrieb der Verpackungsmaschine ermöglicht, da kein Anhalten des Folienvorschubs für den Quertrennschweißvorgang notwendig ist. Die mitlaufende Quertrennschweißeinrichtung kann sich nämlich während des Quertrennschweißvorgangs in der Transportrichtung mit dem Packgut bzw. der Umverpackung aus den Folienbahnen mitbewegen.

Des Weiteren kommt es häufig darauf an, den Verpackungsmaschinen die Packgüter in gleichmäßigen Abständen zuzuführen. Häufig werden die Packgüter in loser Reihenfolge von Bedienpersonen auf entsprechende Transporteinrichtungen aufgelegt und dann mittels dieser Transporteinrichtungen der Verpackungsmaschine zugeführt. Das Auflegen durch die Bedienperson erfolg jedoch nicht in gleichmäßigen Abständen. Es ist in der Regel davon auszugehen, dass die Abstände zwischen den Packgüter größer sind als ein gewünschter Rapport. Unter "Rapport" wird dabei im Rahmen der vorliegenden Anmeldung der Abstand zwischen der (bezüglich der Transportrichtung) Vorderkante eines Packguts und der Vorderkante des nachfolgenden Packguts verstanden. Um einen gleichmäßigen Rapport und damit eine bestimmte Taktrate der Verpackungsmaschine zwischen den aufeinanderfolgenden Packgütern einzustellen, sind daher im Stand der Technik vor den Verpackungsmaschinen zusätzliche Stationen vorgesehen, die den Abstand zwischen den Packgütern einstellen. Dabei sind in der Regel ein zusätzliches Förderband oder überlappende Förderbänder vorgesehen, wobei durch unterschiedliche Geschwindigkeiten der Förderbänder der Abstand aufeinanderfolgender Packgüter variiert wird. Hierzu sind jedoch zusätzliche Förderbänder bzw. Transporteinrichtungen notwendig, was den Aufbau der gesamten Anlage aufwendiger und kostspieliger macht.

Ein solcher Aufbau mit zusätzlichen Zuführbändern, die der Verpackungsmaschine vorgelagert sind und sich mit einer Einlauftransporteinrichtung der Verpackungsmaschine teilweise überlappen, ist beispielsweise in der Druckschrift DE 198 22 837 C1 gezeigt. Eine Verpackungsmaschme gemäß dem Oberbegriff des Anspruchs 1 ist in der Druckschrift EP 0 537 844 A1 gezeigt. Weitere Verpackungsmaschinen zeigen die Druckschriften EP 2 103 521 A2, WO 96/31397 A1, US 4 537 016 A.

Es ist daher eine Aufgabe der Erfindung, eine Serienpackmaschine, d.h. eine Verpackungsmaschine, bei der das Packgut auf allen vier Seiten verschweißt wird, mit hoher Taktrate und konstruktiv einfacher Abstandseinstellung zwischen den Packgütern bereitzustellen.

Gemäß einem ersten Aspekt der Erfindung wird daher vorgeschlagen, die eingangs genannte Verpackungsmaschine dahingehend weiterzubilden, dass die Verpackungsmaschine zwei Längstrennschweißeinrichtungen zum Verschweißen der Umverpackung parallel zu der Transportrichtung aufweist, wobei die Quertrennschweißeinrichtung in der Transportrichtung vor den Längstrennschweißeinrichtungen angeordnet ist, wobei die Quertrennschweißeinrichtung als zwischen einem Einlaufpunkt und einem Auslaufpunkt mitlaufende Quertrennschweißeinrichtung ausgebildet ist, die ihre Ausgangsstellung in dem Auslaufpunkt einnimmt, und wobei in der Regelungseinrichtung ein Soll-Abstand zwischen einem Packgut und einem nachfolgenden Packgut hinterlegt ist, und die Regelungseinrichtung derart ausgebildet ist, dass sie, wenn ein von einer Sensoreinrichtung ermittelter Ist-Abstand größer als der Soll-Abstand ist, die Geschwindigkeit der mitlaufenden Quertrennschweißeinrichtung und die Geschwindigkeit der Auslauftransporteinrichtung derart verringert, dass sich zwischen dem auf der Auslauftransporteinrichtung angeordneten Packgut und dem nachfolgenden, auf der Einlauftransporteinrichtung angeordneten Packgut der Soll-Abstand einstellt. Der "Einlaufpunkt" liegt dabei bezüglich der Transportrichtung stromaufwärts. Der "Auslaufpunkt" liegt bezüglich der Transportrichtung stromabwärts. Die Quertrennschweißeinrichtung ist also zwischen dem Einlaufpunkt und dem Auslaufpunkt bewegbar. Insbesondere können die Auslauftransporteinrichtung und/oder die Einlauftransporteinrichtung jeweils als Saugband ausgebildet sein. Dabei wird ein Packgut an die jeweilige Transporteinrichtung angesaugt.

Mitlaufende Quertrennschweißeinrichtungen wurden bisher lediglich für Formschultermaschinen vorgeschlagen, d.h. solche Verpackungsmaschinen, bei denen lediglich eine einzige Längstrennschweißnaht zu erzeugen ist, da mittels einer Formschulter ein Schlauchbeutel aus der die Umverpackung bildenden Folie gebildet wird. Dies ist etwa in den Druckschriften US 5,653,085 A und auch in der Druckschrift US 5,365,859 A gezeigt. Bei derartigen Maschinen lässt sich so die Taktrate entsprechend erhöhen.

Auch bei Serienpackmaschinen lässt sich der Einsatz einer mitlaufenden Quertrennschweißeinrichtung realisieren. Insbesondere kann auch das Einfahren des verpackten Packguts in einen aus einer oberen Folienbahn und einer unteren Folienbahn gebildeten Folienvorhang in üblicher Weise erfolgen. Dabei nimmt das Packgut nach wie vor ein geeignetes Maß von der oberen und von der unteren Folienbahn ab, so dass die üblichen Vorteile der Serienpackmaschine gegenüber einer Formschultermaschine erhalten bleiben. Darüber hinaus lässt sich jedoch eine höhere Taktrate erzielen.

Eine Verpackungsmaschine lässt sich grundsätzlich in eine sogenannte "Ausgangsstellung" zurücksetzen. Diese Ausgangsstellung, die auch als Grundstellung bezeichnet sein kann, nimmt die Verpackungsmaschine bzw. ihre Quertrennschweißeinrichtung zu Beginn eines Verpackungsvorgangs ein. Die Verpackungsmaschine bzw. die Quertrennschweißeinrichtung erreicht diese Ausgangsstellung immer wieder, wenn ein Verpackungszyklus eines Packguts abgeschlossen ist und ein nachfolgendes Packgut verpackt werden soll.

Bei bisher bekannten mitlaufenden Quertrennschweißeinrichtungen ist stets vorgesehen, dass die Quertrennschweißeinrichtung ihre Ausgangsstellung in dem Einlaufpunkt einnimmt. Das Packgut passiert dann die Quertrennschweißeinrichtung, die in der Ausgangsstellung geöffnet ist. Die Quertrennschweißeinrichtung wird dann dem Packgut nachgeführt bzw. mit dem Packgut mitbewegt, wobei sie sich schließt und auf diese Weise die Verpackungsmaschine nicht für den Quertrennschweißvorgang angehalten werden muss. Anschließend öffnet sich die Quertrennschweißeinrichtung wieder und bewegt sich in die Ausgangsstellung zurück.

Es wird jedoch vorgeschlagen, dass die Quertrennschweißeinrichtung ihre Ausgangsstellung in dem Auslaufpunkt einnimmt, wobei das Packgut bezüglich der Transportrichtung nach der Quertrennschweißeinrichtung zu mindestens einer Längstrennschweißeinrichtung transportiert wird. Dabei wird das Packgut mittels einer Einlauftransporteinrichtung zu der Quertrennscheißeinrichtung hin und mittels einer Auslauftransporteinrichtung von der Quertrennschweißeinrichtung weg transportiert.

Die Quertrennschweißeinrichtung wird dann zunächst bezüglich der Transportrichtung stromaufwärts bewegt, d.h. gegenläufig zu einem sich in Transportrichtung bewegenden Packgut, d.h. einem sich stromabwärts bewegenden Packgut. Dabei fährt jedoch das Packgut in den Folienvorhang ein und nimmt ein notwendiges Maß von der oberen Folienbahn und der unteren Folienbahn ab. Hat das Packgut die Quertrennschweißeinrichtung passiert, wird diese dann mit dem Packgut mitbewegt und der Quertrennschweißvorgang durchgeführt, bis wiederum der Auslaufpunkt erreicht ist, in dem sich die Quertrennschweißeinrichtung öffnet. Die Quertrennschweißeinrichtung befindet sich nun wieder in ihrer Ausgangsstellung und der aus der verschweißten oberen Folienbahn und unteren Folienbahn gebildete Folienvorhang ist wieder straff gespannt. Das darauffolgende Packgut kann nun in den Folienvorhang einfahren.

Auf diese Weise lässt sich im Quertrennschweißvorgang der wesentliche Vorteil einer Serienpackmaschine beibehalten. Würde man die Quertrennschweißeinrichtung in ihrer Ausgangsstellung in dem Einlaufpunkt positionieren, müsste zunächst ein Packgut die Quertrennschweißeinrichtung vollständig passieren und die Quertrennschweißeinrichtung würde sich dann schließen und dem Packgut folgen, bis es den Auslaufpunkt erreicht. Die Quertrennschweißeinrichtung müsste nun quasi eine "Leerfahrt" von dem Auslaufpunkt zu dem Einlaufpunkt vollführen und auf den Durchlauf des darauffolgenden Packguts warten. Diese Totzeit reduziert jedoch die Taktrate.

Des Weiteren würde die Rückführung der Quertrennschweißeinrichtung von dem Auslaufpunkt zu dem Einlaufpunkt eine Verkürzung der oberen Folienbahn und der unteren Folienbahn bewirken, so dass insbesondere für die obere Folienbahn eine geeignete Mimik vorgesehen sein müsse, die diese Verkürzung beispielsweise mittels einer federnd gelagerten Rolle kompensiert. Vorliegend wird dieses jedoch vermieden.

Des Weiteren ist es auf diese Weise möglich, das Packgut direkt, d.h. ohne zwischenliegende Unterfolie, auf der Einlauftransporteinrichtung, insbesondere auch seitlich geführt, sehr nahe an die Quertrennschweiß- und die Längstrennschweißeinrichtung heranzufahren. Das Packgut behält so seine Ausrichtung und gewünschte Lage bis zum Erreichen der Quertrennschweißeinrichtung bei. Das Packgut wird dann zunächst querverschweißt und erst dann längssverschweißt, wobei während des Längsschweißvorgangs ebenfalls eine gute seitliche Führung des Packguts sichergestellt ist. Bevor das Packgut in die Quertrennschweißeinrichtung einfährt, liegt das Packgut zudem nicht auf der unteren Folienbahn auf, was einen sicheren und lagerichtigen Transport des Packguts bis an die mitlaufende Quertrennschweißeinrichtung heran ermöglicht.

Letztlich kann das Packgut bis an die Quertrennschweißeinrichtung herangeführt werden, ohne dass bereits ein Abstand zu einem nachfolgenden oder einem vorhergehenden Packgut eingeregelt sein muss. Die Regelung dieses Abstands kann bei der Überquerung der Stempellücke erfolgen, indem die Geschwindigkeit der mitlaufenden Quertrennschweißeinrichtung und der Auslauftransporteinrichtung hinter der Stempellücke relativ zu der Einlauftransporteinrichtung vor der Stempellücke geregelt werden. Da in dem Bereich der mitlaufenden Querschweißeinrichtung ohnehin Sensoren zur Detektion eines einlaufenden Packguts angeordnet sind, können so weitere Sensoren und die Bereitstellung einer weiteren Übergabestelle zwischen zwei Transporteinrichtungen zur Einstellung des Abstands zwischen den Packgütern eingespart werden.

Zusätzliche, der Verpackungsmaschine vorgeschaltete Fördereinrichtungen sind somit überflüssig. Für Serienpackmaschinen mit mitlaufender Quertrennschweißeinrichtung entsteht somit ein wesentlicher, vorteilhafter Synergieeffekt. Aufgrund der bezüglich der Transportrichtung vor der Längstrennschweißeinrichtungen erfolgte Anordnung der Quertrennschweißeinrichtung und der Ausgangsstellung der mitlaufenden Quertrennschweißeinrichtung in ihrem Auslaufpunkt, d.h. stromab, können die Packgüter unmittelbar auf der Einlauftransporteinrichtung, bis an die Stempellücke zwischen der Einlauftransporteinrichtung und der Auslauftransporteinrichtung herangefahren werden. Nur so wird es bei einer Serienpackmaschine mit mitlaufender Quertrennschweißeinrichtung möglich, nicht nur die Taktrate zu erhöhen, sondern auch gleichzeitig über der Stempellücke eine Regelung des Abstandes zwischen aufeinanderfolgenden Packgütern ohne zusätzliche, der Verpackungsmaschine vorgeschaltete Förderelemente durchzuführen.

Gemäß einem zweiten Aspekt der Erfindung wird vorgeschlagen, das eingangs genannte Verfahren dahingehend weiterzubilden, dass das Packgut bezüglich der Transportrichtung nach einer Quertrennschweißeinrichtung zu zwei Längstrennschweißeinrichtungen transportiert wird; dass die Quertrennschweißeinrichtung parallel zu der Transportrichtung zwischen einem bezüglich der Transportrichtung stromauf gelegenen Einlaufpunkt und einem stromab gelegenen Auslaufpunkt bewegt wird, wobei die Quertrennschweißeinrichtung ihre Ausgangsstellung in dem Auslaufpunkt einnimmt; und dass des Weiteren ein Ist-Abstand zwischen einem Packgut und einem nachfolgenden Packgut (12') ermittelt wird, und, wenn der Ist-Abstand größer als ein Soll-Abstand ist, die Geschwindigkeit der mitlaufenden Quertrennschweißeinrichtung und die Geschwindigkeit der Auslauftransporteinrichtung derart verringert wird, dass sich zwischen dem auf der Auslauftransporteinrichtung angeordneten Packgut und dem nachfolgenden, auf der Einlauftransporteinrichtung angeordneten Packgut der Soll-Abstand einstellt.

Wie bereits eingangs ausgeführt wurde, ist der Abstand zwischen aufeinanderfolgenden Packgütern in der Regel größer als gewünscht. Der gewünschte Abstand kann in der Regelungseinrichtung vorgegeben werden. Dies kann direkt als Eingabe des Soll-Abstands, d.h. des Abstands zwischen der Hinterkante eines Packguts und der Vorderkante eines nachfolgenden Packguts eingegeben werden, genauso wird darunter aber auch verstanden, dass der Soll-Abstand mittelbar eingegeben wird. Dies kann beispielsweise geschehen, indem der sog. "Rapport", d.h. der Abstand zwischen der Vorderkante eines Packguts und der Vorderkante eines nachfolgenden Packguts eingegeben wird. Dies geschieht, indem der Verpackungsmaschine die Länge und die Höhe der zu verpackenden Packgüter eingegeben wird. Der Rapport kann sich in einer Ausgestaltung aus den Dimensionen der Packgüter bestimmen. Dabei wird davon ausgegangen, dass die Packgüter gleiche Dimensionen aufweisen. Beispielsweise kann vorgesehen sein, dass der Rapport gleich der Summe aus der Länge und der Höhe der Packgüter zuzüglich 40 mm ist. Die Länge der Packgüter entspricht dabei ihrer Erstreckung parallel zu der Transportrichtung. Der Soll-Abstand entspricht somit dem Rapport minus der Länge eines Packgut. In einer Ausgestaltung ergibt dies mit anderen Worten, dass der Soll-Abstand gleich der jeweiligen Höhe der Packgüter zuzüglich 40 mm ist.

Da in der Ausgestaltung ein ursprünglich zu großer Ist-Abstand auf den Soll-Abstand eingestellt wird, ergibt sich ein weiterer Vorteil der Erfindung. Die Lücken zwischen den aufeinanderfolgenden Packgütern sind zu dem Zeitpunkt, in dem der Oberstempel der mitlaufenden Quertrennschweißeinrichtung zwischen die Packgüter eintaucht, noch größer als der Soll-Abstand. Natürlich ist es regelungstechnisch einfacher, eine größere Lücke mittels des Oberstempels der Quertrennschweißeinrichtung zu treffen. Die Abstände zwischen den einzelnen Packgütern werden dann erst bei der Überquerung der Stempellücke zwischen der Einlauftransporteinrichtung und der Auslauftransporteinrichtung auf den Soll-Abstand verringert. Gegenüber dem aus dem Stand der Technik bekannten Verfahren, bei dem bereits vor der Verpackungsmaschine der Abstand eingestellt wird und die Packgüter bereits eingetaktet auf die Einlauftransporteinrichtung gebracht werden, ergibt sich somit der Vorteil, dass zwischen den einzelnen Packgütern noch größere Lücken vorliegen und diese regelungstechnisch einfacher mittels der Quertrennschweißeinrichtung anzusteuern sind.

Das Verfahren gemäß dem zweiten Aspekt der Erfindung weist der Verpackungsmaschine gemäß dem ersten Aspekt der Erfindung entsprechende Merkmale auf und stellt daher dieselben Vorteile bereit.

Des Weiteren wird gemäß einem dritten Aspekt der Erfindung vorgeschlagen, eine Verpackungsmaschine bereitzustellen, die zur Durchführung des Verfahrens gemäß dem zweiten Aspekt der Erfindung oder einer seiner Ausgestaltungen ausgebildet ist. Eine derartige Verpackungsmaschine weist dieselben Vorteile wie das Verfahren gemäß dem zweiten Aspekt der Erfindung auf.

Die eingangs gestellte Aufgabe wird somit vollkommen gelöst.

In einer Ausgestaltung der Verpackungsmaschine gemäß dem ersten Aspekt der Erfindung ist vorgesehen, dass die Verpackungsmaschine des Weiteren eine Sensoreinrichtung aufweist, um einen Ist-Abstand zwischen einem Packgut und einem nachfolgenden Packgut zu ermitteln.

Auf diese Weise ist es möglich, den Ist-Abstand zwischen aufeinanderfolgenden Packgütern zu ermitteln und durch einen Abgleich mit einem Soll-Abstand das Maß zu ermitteln, um das die Regelungseinrichtung in den Geschwindigkeitsverlauf der mitlaufenden Quertrennschweißeinrichtung und der Auslauftransporteinrichtung eingreifen muss.

In einer weiteren Ausgestaltung der Verpackungsmaschine gemäß dem ersten Aspekt der Erfindung kann vorgesehen sein, dass die Regelungseinrichtung derart ausgebildet ist, dass sie die Geschwindigkeit der mitlaufenden Quertrennschweißeinrichtung und/oder die Geschwindigkeit der Auslauftransporteinrichtung regelt, indem sie einen jeweiligen absoluten Geschwindigkeitswert herabsetzt und den jeweiligen charakteristischen Verlauf der Geschwindigkeit beibehält.

Entsprechend kann bei dem Verfahren gemäß dem zweiten Aspekt der Erfindung vorgesehen sein, dass die Geschwindigkeit der mitlaufenden Quertrennschweißeinrichtung und/oder die Geschwindigkeit der Auslauftransporteinrichtung geregelt werden, indem ein jeweiliger absoluter Geschwindigkeitswert herabgesetzt wird und ein jeweiliger charakteristischer Verlauf der Geschwindigkeit beibehalten wird.

Unter einem "absoluten Geschwindigkeitswert" wird dabei die Größe der Geschwindigkeit an sich verstanden. So wäre beispielsweise die Herabsetzung einer Geschwindigkeit zu einem Zeitpunkt t von 2 m pro Sekunde auf 1 m pro Sekunde ein Herabsetzen des absoluten Geschwindigkeitswerts. Unter einem "charakteristischen Verlauf" der Geschwindigkeiten wird dabei der zeitliche Verlauf einer jeweiligen Geschwindigkeit verstanden. Ist beispielsweise der zeitliche Verlauf einer Geschwindigkeit eine Sinus-Wellenform, so wird diese Sinus-Wellenform beibehalten. Insbesondere ist darunter zu verstehen, dass die Lage von Extrempunkten und Nulldurchgängen relativ zueinander erhalten bleibt. Beispielsweise würde so bei einer Sinus-Wellenform die Charakteristik einer Sinus-Wellenform erhalten bleiben. Die Amplitude würde jedoch geändert. Gegebenenfalls kann auch beispielsweise die Frequenz geändert werden. Gleiches kann auch für die zugrunde liegenden Beschleunigungen gelten.

Auf diese Weise ist es insbesondere möglich, für die Beschleunigung der Auslauftransporteinrichtung und/oder der mitlaufenden Quertrennschweißeinrichtung kontinuierliche charakteristische Verläufe und sich daraus ergebende Verläufe der jeweiligen Geschwindigkeiten vorzugeben. Hierdurch ergibt sich dann auch ein ruckfreier Betrieb der Einlauftransporteinrichtung, der Auslauftransporteinrichtung und der mitlaufenden Quertrennschweißeinrichtung und dadurch ein ruhiges Arbeiten der gesamten Verpackungsmaschine. Nicht zuletzt kann dadurch ein ruhiger Transport der Packgüter auf der Einlauftransporteinrichtung und der Auslauftransporteinrichtung sichergestellt werden, und insbesondere bei gestapelten Packgütern ein Verrutschen der gestapelten Elemente vermieden werden.

Mittels der vorgeschlagenen Ausgestaltungen werden diese kontinuierlichen charakteristischen Verläufe dann beibehalten und/oder ggf. bezüglich der Frequenz oder des zeitlichen Verlaufs skaliert.

In einer weiteren Ausgestaltung der Verpackungsmaschine gemäß dem ersten Aspekt der Erfindung kann vorgesehen sein, dass in der Regelungseinrichtung von einem Soll-Abstand zwischen einem Packgut und einem nachfolgenden Packgut und einem Ist-Abstand zwischen dem Packgut und dem nachfolgenden Packgut abhängige Geschwindigkeitskurven für die Geschwindigkeit der mitlaufenden Quertrennschweißeinrichtung und/oder der Geschwindigkeit der Auslauftransporteinrichtung hinterlegt sind, um den Ist-Abstand auf den Soll-Abstand einzustellen.

Entsprechend kann auch bei dem Verfahren gemäß dem zweiten Aspekt der Erfindung vorgesehen sein, dass von einem Soll-Abstand zwischen einem Packgut und einem nachfolgenden Packgut und von einem Ist-Abstand zwischen dem Packgut und dem nachfolgenden Packgut abhängige Geschwindigkeitskurven für die Geschwindigkeit der mitlaufenden Quertrennschweißeinrichtung und/oder für die Geschwindigkeit der Auslauftransporteinrichtung abgefragt werden, um den Ist-Abstand auf den Soll-Abstand einzustellen.

In weiteren Ausgestaltungen kann sowohl bei der Verpackungsmaschine gemäß dem ersten Aspekt der Erfindung als auch bei dem Verfahren gemäß dem zweiten Aspekt der Erfindung selbstverständlich vorgesehen sein, dass alternativ entsprechende Beschleunigungskurven für eine Beschleunigung der mitlaufenden Quertrennschweißeinrichtung und/oder der Beschleunigung der Auslauftransporteinrichtung hinterlegt sind, aus denen sich dann die entsprechenden Geschwindigkeiten ergeben. Außerdem können als Alternative natürlich auch Ortskurven hinterlegt sein.

Auf diese Weise wird eine besonders schnelle Regelung ermöglicht. Für eine Vielzahl einstellbarer Soll-Abstände bzw. eine Vielzahl von Rapporten, die jeweils mit einer Vielzahl von ermittelten Ist-Abständen aufeinanderfolgende Packgüter kombiniert sind, können so vorberechnete Geschwindigkeitskurven bzw. Beschleunigungs- oder Ortskurven in der Regelungseinrichtung hinterlegt sein. Eine Echtzeitberechnung ist dann nicht erforderlich. Aus dem vorgegebenen Soll-Abstand und dem ermittelten Ist-Abstand kann direkt die hinterlegte Geschwindigkeitskurve bzw. Beschleunigungskurve oder Ortskurve ausgelesen werden. In einer Ausgestaltung kann des Weiteren vorgesehen sein, dass die Regelungseinrichtung die entsprechenden Geschwindigkeitskurven bzw. Beschleunigungskurven oder Ortskurven zwischen zwei hinterlegten Geschwindigkeitskurven bzw. Beschleunigungskurven oder Ortskurven interpoliert, wenn der Ist-Abstand und/oder der Soll-Abstand zwischen zwei hinterlegten Werten liegt. Die Interpolation kann dabei mittels linearer Interpolation erfolgen.

In einer weiteren Ausgestaltung der Verpackungsmaschine gemäß dem ersten Aspekt der Erfindung kann vorgesehen sein, dass die Regelungseinrichtung derart ausgebildet ist, dass sie bei einer Regelung der mitlaufenden Quertrennschweißeinrichtung lediglich einen absoluten Geschwindigkeitswert der Geschwindigkeit der mitlaufenden Quertrennschweißeinrichtung bei einer Bewegung der mitlaufenden Quertrennschweißeinrichtung entgegengesetzte Transportrichtung verringert.

Entsprechend kann auch bei dem Verfahren gemäß dem zweiten Aspekt der Erfindung vorgesehen sein, dass bei einer Regelung der mitlaufenden Quertrennschweißeinrichtung lediglich ein absoluter Geschwindigkeitswert der Geschwindigkeit der mitlaufenden Quertrennschweißeinrichtung bei einer Bewegung der mitlaufenden Quertrennschweißeinrichtung entgegengesetzten Transportrichtung verringert wird.

Die Bewegung der mitlaufenden Quertrennschweißeinrichtung entgegengesetzt der Transportrichtung, der sog. "Rückhub", stellt den geeignetsten Bewegungsablauf der mitlaufenden Quertrennschweißeinrichtung dar, um letztlich eine Änderung der Relativbewegung zwischen der mitlaufenden Quertrennschweißeinrichtung und einem auf der Einlauftransporteinrichtung ankommenden Packgut zu bewirken. Während der Bewegung der mitlaufenden Quertrennschweißeinrichtung in Richtung der Transportrichtung muss die mitlaufende Quertrennschweißeinrichtung zum einen von hinten an das Packgut heranfahren, wobei darauffolgend der Quertrennschweißvorgang initiiert wird. Während des Quertrennschweißvorgangs und bei geschlossenem Ober- und Unterstempel muss sich die mitlaufende Quertrennschweißeinrichtung mit derselben Geschwindigkeit wie das Packgut, d.h. mit derselben Geschwindigkeit wie die Einlauftransporteinrichtung mitbewegen, da während des Quertrennschweißvorgangs keine Relativbewegung zwischen den Folienbahnen und dem Ober- und dem Unterstempel erfolgen darf. Anschließend öffnen sich der Ober- und der Unterstempel wieder, wenn sich die Quertrennschweißeinrichtung in ihrer Auslaufposition befindet. Somit wäre nur der relativ geringe Weg während des Bewegens des Ober- und des Unterstempels von hinten an das Packgut heran gegeben, um die Relativbewegung zu variieren. Hier ist eine Variation über einen großen Bereich jedoch nur schwer möglich, da auch eine Kollision des Oberstempels und des Packguts verhindert werden muss. Insofern stellt die Variation des absoluten Geschwindigkeitswerts während des Rückhubs die geeignetste Größe zur Reaktion der Relativbewegung zwischen mitlaufender Quertrennschweißeinrichtung und Packgut dar.

In einer weiteren Ausgestaltung der Verpackungsmaschine gemäß dem ersten Aspekt der Erfindung kann vorgesehen sein, dass die Regelungseinrichtung derart ausgebildet ist, dass sie eine Geschwindigkeit der mitlaufenden Quertrennschweißeinrichtung bei einer Bewegung der mitlaufenden Quertrennschweißeinrichtung entgegengesetzte Transportrichtung derart regelt, dass sie für den dazugehörigen Verlauf der Beschleunigung der Quertrennschweißeinrichtung der charakteristische Verlauf einer vollständigen Sinusschwingung ergibt.

Entsprechend kann auch bei dem Verfahren gemäß dem zweiten Aspekt der Erfindung vorgesehen sein, dass eine Geschwindigkeit der mitlaufenden Quertrennschweißeinrichtung bei einer Bewegung der mitlaufenden Quertrennschweißeinrichtung entgegengesetzte Transportrichtung derart geregelt wird, dass sich für den dazugehörigen Verlauf der Beschleunigung der Quertrennschweißeinrichtung der charakteristische Verlauf einer vollständigen Sinusschwingung ergibt.

Auf diese Weise wird, wie bereits voranstehend ausgeführt wurde, besonders geeignet aufgrund des kontinuierlichen Beschleunigungsverlaufs ein kontinuierlicher Verlauf der mitlaufenden Quertrennschweißeinrichtung und dadurch ein materialschonender und ruhiger Betrieb der Verpackungsmaschine ermöglicht.

Selbstverständlich kann für den charakteristischen Verlauf der Beschleunigung der Auslauftransporteinrichtung entsprechend vorgesehen sein, dass sie den charakteristischen Verlauf einer halben Sinusschwingung aufweist. Dies ergibt sich daraus, dass die Auslauftransporteinrichtung das Packgut nicht entgegen der Transportrichtung zeitweise stromaufwärts fördern soll.

In einer weiteren Ausgestaltung der Verpackungsmaschine gemäß dem ersten Aspekt der Erfindung ist vorgesehen, dass die Regelungseinrichtung derart ausgebildet ist, dass sie die Geschwindigkeit der Quertrennschweißeinrichtung und die Geschwindigkeit der Auslauftransporteinrichtung für eine vorbestimmte Zeitdauer auf Null verringert, wenn der Ist-Abstand zwischen einem Packgut und einem nachfolgenden Packgut größer oder gleich dem Zweifachen des Soll-Abstandes zwischen dem Packgut und dem nachfolgenden Packgut ist.

Entsprechend kann auch bei dem Verfahren gemäß dem zweiten Aspekt der Erfindung vorgesehen sein, dass die Geschwindigkeit der Quertrennschweißeinrichtung und die Geschwindigkeit der Auslauftransporteinrichtung für eine vorbestimmte Zeitdauer auf Null verringert wird, wenn der Ist-Abstand zwischen einem Packgut und einem nachfolgenden Packgut größer oder gleich dem Zweifachen des Soll-Abstandes zwischen dem Packgut und dem nachfolgenden Packgut ist.

In dieser Ausgestaltung sind die hinterlegten Geschwindigkeitskurven bzw. Beschleunigungskurven oder Ortskurven somit lediglich bis zu einem Ist-Abstand hinterlegt, der dem Doppelten des Soll-Abstands entspricht.

In einer weiteren Ausgestaltung der Verpackungsmaschine gemäß dem ersten Aspekt der Erfindung kann vorgesehen sein, dass eine Geschwindigkeit der Einlauftransporteinrichtung konstant ist.

Entsprechend kann auch bei dem Verfahren gemäß dem zweiten Aspekt der Erfindung vorgesehen sein, dass eine Geschwindigkeit der Einlauftransporteinrichtung konstant ist.

Ein weiterer Vorteil der vorgeschlagenen Verpackungsmaschine und des vorgeschlagenen Verfahrens besteht darin, dass keine Variation einer Geschwindigkeit der Einlauftransporteinrichtung vorgenommen werden muss. Die Geschwindigkeit der Einlauftransporteinrichtung kann konstant gehalten werden. Relativ zu dieser bekannten konstanten Geschwindigkeit der Einlauftransporteinrichtung werden dann die Geschwindigkeiten der Auslauftransporteinrichtung und der mitlaufenden Quertrennschweißeinrichtung geregelt.

Unter dem Begriff "ortsfest" wird im Rahmen der vorliegenden Anmeldung verstanden, dass die entsprechenden Elemente nicht parallel zu der Transportrichtung bewegt werden. Wenn die Quertrennschweißeinrichtung parallel zu der Transportrichtung bewegt wird, verbleiben die entsprechenden ortsfesten Elemente an ihrem Ort und bewegen sich nicht. Eine Bewegung der ersten Längstrennschweißeinrichtung und der zweiten Längstrennschweißeinrichtung erfolgt beispielsweise nicht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine schematische Ansicht der Bauelemente einer Ausführungsform Verpackungsmaschine,

Fig. 2    eine schematische Oberansicht der Bauelemente in einem Bereich der Längstrennschweißeinrichtungen der Verpackungsmaschine in Fig. 1,

Fig. 3    eine detaillierte Darstellung des Bereichs III in Fig. 1,

Fig. 4a-4d    eine schematische Darstellung des Ablaufs eines Verfahrens zum Quertrennschweißen mittels einer mitlaufenden Quertrennschweißeinrichtung,

Fig. 5    eine schematische Querschnittsansicht zur Erläuterung der für die Regelung der Geschwindigkeit der mitlaufenden Quertrennschweißeinrichtung und der Geschwindigkeit der Auslauftransporteinrichtung herangezogenen Größen,

Fig. 6    ein Ablaufdiagramm einer Ausführungsform eines Verfahrens zum Einstellen des Abstands zwischen aufeinanderfolgenden Packgütern.

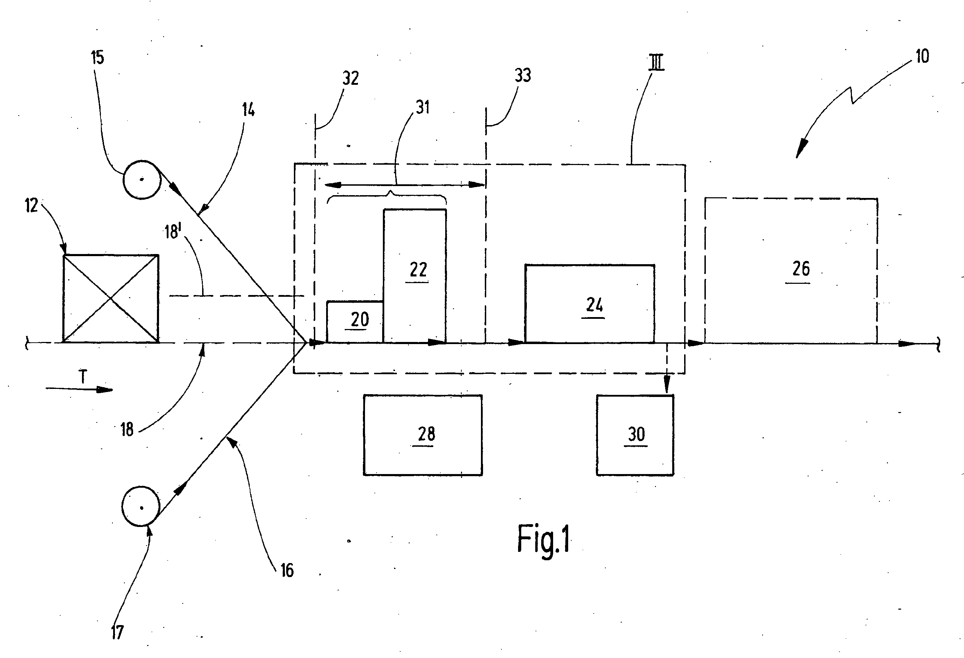

Fig. 1 zeigt eine schematische Ansicht einer Verpackungsmaschine 10. Die Verpackungsmaschine 10 ist als Serienpackmaschine ausgeführt.

Die Verpackungsmaschine 10 dient dazu, ein Packgut 12 mit einer Umverpackung zu versehen. Die Umverpackung besteht aus einer oberen Folienbahn 14 und einer unteren Folienbahn 16, die sich um das Packgut 12 herumlegen, wenn dieses durch einen von den Folienbahnen 14, 16 gebildeten Folienvorhang einfährt, und miteinander verschweißt werden.

Die obere Folienbahn 14 wird mittels einer oberen Folienzuführung 15 zugeführt und die untere Folienbahn 16 wird mittels einer unteren Folienzuführung 17 zugeführt.

Die obere Folienbahn 14 und die untere Folienbahn 16 laufen in einer Folienebene 18 zusammen, in der sie durch die Verpackungsmaschine 10 transportiert und verarbeitet werden. Die Folienebene 18 kann diejenige Ebene sein, in der beispielsweise eine Transporteinrichtung zum Fördern des Packguts 12 angeordnet ist, die Folienebene 18 kann jedoch auch beispielsweise auf halber Höhe des Packguts 12 vorgesehen sein, wie mit einer Folienebene 18' dargestellt ist. Insbesondere kann die Folienebene 18 in ihrer Höhe verstellbar sein.

Das Packgut 12 wird durch die Verpackungsmaschine 10 in einer Transportrichtung T gefördert. Dabei läuft das Packgut 12 zunächst in die obere Folienbahn 14 und die untere Folienbahn 16 ein und wird durch ein mindestens ein Rollenpaar 20 geführt. Das Rollenpaar 20 dient dazu, die obere Folienbahn 14 und die untere Folienbahn 16 parallel zu der Transportrichtung T in der Folienebene 18 bzw. 18' zu führen. Des Weiteren fährt das Packgut 12 mit den vorgespannten Folien 14, 16 in eine Quertrennschweißeinrichtung 22 ein. Die Quertrennschweißeinrichtung 22 dient dazu, die Folien 14, 16 in einer Richtung quer zu der Transportrichtung T zumindest teilweise zu durchtrennen und miteinander zu verschweißen. Üblicherweise ist dazu in der Quertrennschweißeinrichtung 22 ein beheiztes Messer oder ein beheizter Draht vorgesehen, der die Folien 14, 16 durchtrennt und miteinander verschweißt. Die Anordnung des mindestens einen Rollenpaars 20 relativ zu der Quertrennschweißeinrichtung ist lediglich beispielhaft zu verstehen. Das Rollenpaar 20 und die Quertrennschweißeinrichtung 22 können sich in Transportrichtung T auch etwa auf gleicher Höhe bzw. leicht davor befinden.

Bei der Verarbeitung wird durch die Quertrennschweißeinrichtung 22 eine in Transportrichtung T weisende Seite des Packguts 12 und eine entgegengesetzt zu der Transportrichtung T weisende Seite des Packguts 12 verschweißt. Des Weiteren durchfährt das Packgut 12 eine Längstrennschweißeinrichtung 24, die bei einer Serienpackmaschine zu beiden Seiten des Packguts 12 angeordnet ist. Die Folienbahnen 14, 16 werden in der Längstrennschweißeinrichtung 24 zu beiden Längsseiten des Packguts 12 miteinander verschweißt und ein eventuell vorhandener Folienüberstand wird abgetrennt. Das Packgut 12 ist dann vollständig von den Folienbahnen 14, 16 umgeben und an allen vier Seiten verschweißt. Es kann vorgesehen sein, dass das Packgut 12 dann in einen Schrumpftunnel 26 einläuft, in dem die Folienbahnen 14, 16, die die Umverpackung bilden, auf das Packgut 12 mittels einer geeigneten Wärmebehandlung aufgeschrumpft werden.

Die Verpackungsmaschine 10 weist Verstelleinrichtungen 28 auf, die dazu dienen, die Verpackungsmaschine 10 auf eine Höhe und eine Breite des Packguts 12 einzustellen. Des Weiteren ist eine Folienrückführung 30 vorgesehen, die dazu dient, den in der Längstrennschweißeinrichtung 24 abgetrennten Folienüberstand aufzunehmen, damit dieser wiederverwertet werden kann.

Die Quertrennschweißeinrichtung 22 ist als mitlaufende Quertrennschweißeinrichtung ausgebildet und parallel zu der Transportrichtung T bewegbar. Dies ist durch eine Pfeil 31 angedeutet. Auch das Rollenpaar 20 ist zusammen mit der Quertrennschweißeinrichtung 22 bewegbar. Ein bezüglich der Transportrichtung T stromauf gelegene Extremposition der Quertrennschweißeinrichtung 22 wird als Einlaufpunkt 32 bezeichnet und ist mit einer gestrichelten Linie angedeutet. Eine stromabwärts gelegene Extremposition der Quertrennschweißeinrichtung 22 wird als Auslaufpunkt 33 bezeichnet und ist ebenfalls mit einer gestrichelten Linie angedeutet. Die mitlaufende Quertrennschweißeinrichtung 22 kann sich somit zwischen dem Einlaufpunkt 32 und dem Auslaufpunkt 33 hin- und herbewegen.

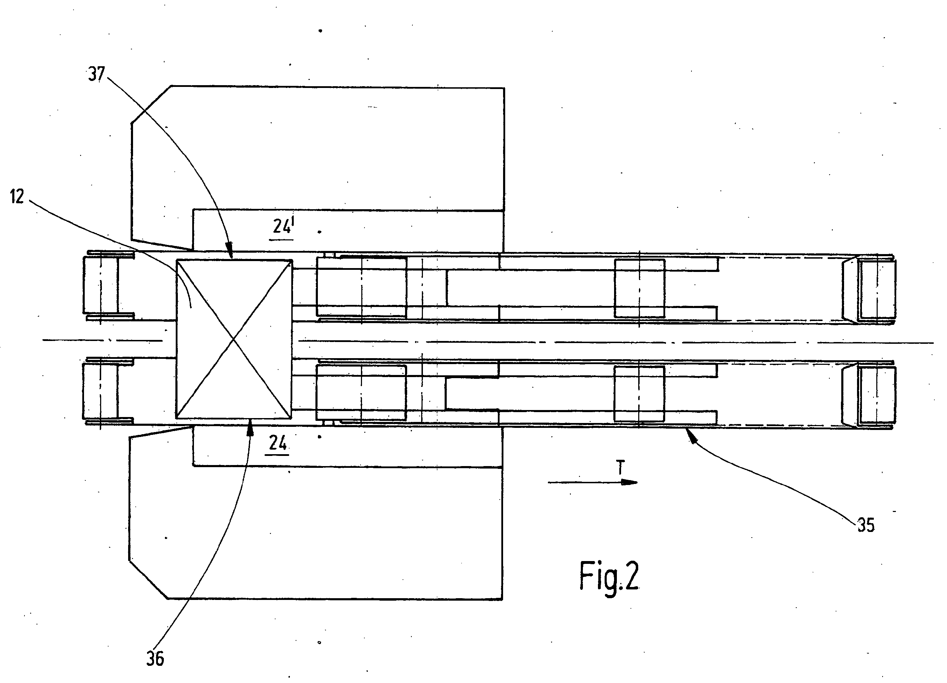

Fig. 2 zeigt eine schematische Oberansicht des Bereichs der Längstrennschweißeinrichtung 24. Wie zu erkennen ist, ist eine Auslauftransporteinrichtung 35 vorgesehen, die das Packgut 12 in der Transportrichtung T fördert. Die Ausgestaltung einer Auslauftransporteinrichtung 35 in der Fig. 2 ist lediglich beispielhaft zu verstehen. Insgesamt weist die Verpackungsmaschine 10 zwei Längstrennschweißeinrichtungen 24, 24' auf. Dies sind eine erste Längstrennschweißeinrichtung 24, die das Packgut 12 bzw. die das Packgut 12 umgebende Umverpackung 14, 16 entlang einer ersten Längsseite 36 verschweißt. Des Weiteren ist eine zweite Längstrennschweißeinrichtung 24' vorgesehen, die entsprechend die Umverpackung 14, 16 an einer zweiten Längsseite 37 verschweißt. Das Packgut 12 wird somit an allen vier Seiten von einer Schweißnaht umgeben, wenn es die Verpackungsmaschine 10 durchlaufen hat.

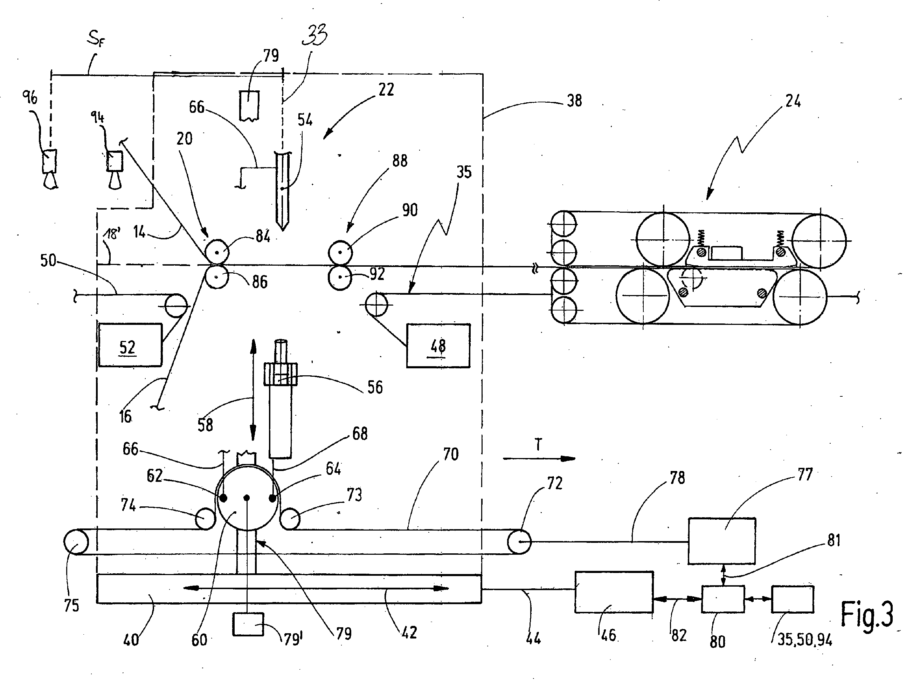

Fig. 3 zeigt eine detaillierte Darstellung eines Bereichs III in Fig. 1. Dargestellt sind die Quertrennschweißeinrichtungen 22 und die in einer Seitenansicht lediglich sichtbare erste Längstrennschweißeinrichtung 24.

Mit einem Rahmen 38 sind diejenigen Elemente der Verpackungsmaschine 10 umgeben, die zusammen mit der Quertrennschweißeinrichtung 22 parallel zu der Transportrichtung T bewegt werden. Diese Elemente werden gemeinsam mittels eines Schlittens 40 parallel zu der Transportrichtung T bewegt, an dem sie jeweils zumindest parallel zu der Transportrichtung T festgelegt sind, was im Einzelnen aus Gründen der Übersichtlichkeit nicht dargestellt ist.

Die Bewegungsrichtung des Schlittens parallel zu der Transportrichtung T ist mit einem Pfeil 42 angedeutet. Der Schlitten 40 ist mittels eines geeigneten Kopplungselements 44, beispielsweise einem Endloselement wie einem Riemen oder einer Kette, mit einer zweiten Antriebseinrichtung 46 bzw. einem Schlittenantrieb verbunden, so dass die zweite Antriebseinrichtung 46 den Schlitten 40 in Richtung des Pfeils 42 bewegen kann. Bei der zweiten Antriebseinrichtung 46 kann es sich beispielsweise um einen Servomotor handeln.

Bei einer Bewegung des Schlittens 40 und der damit einhergehenden Bewegung der Quertrennschweißeinrichtung 22 verkürzt bzw. verlängert sich entsprechend eine Länge der Auslauftransporteinrichtung 35. Die Einlauftransporteinrichtung 35 weist daher eine an sich bekannte Umschlingungsmimik 48 auf, wie sie beispielsweise aus der eingangs genannten Druckschrift US 5,653,085 A bekannt ist, um die entsprechende Verkürzung bzw. Verlängerung der Auslauftransporteinrichtung 35 zu kompensieren. Die Umschlingungsmimik ist aus Gründen der Übersichtlichkeit nicht im Einzelnen dargestellt, wie bereits ausgeführt ist ihre Ausgestaltung dem Fachmann grundsätzlich bekannt. Die Auslauftransporteinrichtung 35 transportiert ein Packgut 12 in Richtung der Längstrennschweißeinrichtung 24 weiter, wenn das Packgut 12 die Quertrennschweißeinrichtung 22 durchlaufen hat.

Entsprechend ist eine Einlauftransporteinrichtung 50 vorgesehen, die das Packgut 12 an die Quertrennschweißeinrichtung 22 heranführt. Auch dessen Länge ändert sich abhängig von der Position des Schlittens 40, so dass auch die Einlauftransporteinrichtung 50 eine entsprechende Umschlingungsmimik 52 aufweist, um ihre Verlängerung bzw. Verkürzung zu kompensieren.

Die Quertrennschweißeinrichtung 22 weist einen Oberstempel 54 und einen Unterstempel 56 auf, die entlang einer durch einen Pfeil 58 angedeuteten Richtung aufeinander zu bewegbar sind und sich in der Folienebene 18' treffen. Aus Gründen der Übersichtlichkeit ist in der Fig. 3 die Folienebene 18' ausgeführt, da sich diese von der Ebene der Transporteinrichtungen 35, 50 unterscheidet.

Der Oberstempel 54 und der Unterstempel 56 werden mittels einer Hebelscheibe 60 angetrieben. Die Hebelscheibe 60 weist einen ersten Anlenkpunkt 62 und einen zweiten Anlenkpunkt 64 auf. Mit dem ersten Anlenkpunkt 62 ist ein Hebelelement 66 gekoppelt, das den Oberstempel 54 bewegt, mit dem zweiten Anlenkpunkt 64 ist ein zweites Hebelelement 68 gekoppelt, das den Unterstempel 56 bewegt. Auf diese Weise ist es möglich, durch eine Drehung der Hebelscheibe 60 den Unterstempel 56 in der in der Fig. 3 dargestellten Perspektive nach oben und den Oberstempel 54 nach unten zu bewegen, so dass sie sich in der Folienebene 18' treffen.

Die Hebelscheibe 60 ist von einem Endloselement 70 umschlungen. Das Endloselement 70 ist beispielsweise als Kette oder als Riemen ausgebildet, wobei die Hebelscheibe 60 eine entsprechend komplementäre Ausbildung über ihren Umfang aufweist, so dass das Endloselement 70 die Hebelscheibe 60 treiben kann. Des Weiteren sind Umlenkrollen 72, 73, 74, 75 vorgesehen, die das Endloselement 70 führen. Die spezifische Ausgestaltung des Verlaufs des Endloselements 70 und der Ausgestaltung der Hebelscheibe 60 in der Fig. 3 ist lediglich beispielhaft zu verstehen. Es sind auch andere Anordnungen denkbar, bzw. andere Umschlingungswege denkbar, in denen das Endloselement 70 die Hebelscheibe 60 treiben kann. Auch die geometrische Form der Hebelscheibe 60 kann variieren. Diese muss lediglich die zwei Anlenkpunkte 62 und 64 aufweisen, um die Hebelelemente 66 und 68 an die Hebelscheibe 60 anzulenken und darüber hinaus eine geeignete Umfangsausgestaltung aufweisen, so dass eine Kraftübertragung von dem Endloselement 70 auf die Hebelscheibe 60 möglich ist, um eine entsprechende Drehung der Hebelscheibe

EP 2 514 677 B1

60 und damit Bewegung des Oberstempels 54 und des Unterstempels 56 zu bewirken.

Zum Antrieb der Hebelscheibe 60 ist eine erste Antriebseinrichtung 77 bzw. ein Hebelscheibenantrieb vorgesehen. Die erste Antriebseinrichtung kann über ein Kopplungselement 78 mit einer der Umlenkrollen, in der dargestellten Ausführungsform der Umlenkrolle 72 verbunden sein, es kann aber beispielsweise auch vorgesehen sein, dass die Umlenkrolle 72 direkt auf einer Ausgangswelle der ersten Antriebseinrichtung 77 angeordnet ist. Die erste Antriebseinrichtung kann beispielsweise als Servomotor ausgebildet sein.

Um die Folienebene 18 bzw. 18' in ihrer Höhe verstellen zu können, ist die Quertrennschweißeinrichtung 22 höhenverstellbar ausgebildet. Dazu ist die Quertrennschweißeinrichtung 22 mittels eines Säulenelements 79 zwar höhenverstellbar, aber in der Transportrichtung T fest mit dem Schlitten 40 gekoppelt. Die Quertrennschweißeinrichtung 22, d.h. insbesondere der Oberstempel 54, der Unterstempel 56, die Hebelelemente 66, 68, die Hebelscheibe 60, sowie das Endloselement 70, die Umlenkrollen 72, 73, 74, 75 und die erste Antriebseinrichtung 77 ist somit relativ zu dem Schlitten 40 entlang des Säulenelements 79 höhenverstellbar. Die Höhenverstellung kann mittels einer geeigneten Höhenantriebseinrichtung (79'), etwa einem Spindelantrieb, bewirkt werden, der mit der Quertrennschweißeinrichtung 22 geeignet gekoppelt ist. In der Transportrichtung (T) ist das Säulenelement 79 jedoch an dem Schlitten festgelegt, so dass gleichzeitig die Funktionalität als mitlaufende Querschweißeinrichtung 22 bereitgestellt ist. Die Höhenantriebseinrichtung kann jedoch ortsfest angeordnet werden und muss dann nicht zusammen mit dem Schlitten 40 bewegt werden, was die anzutreibenden Massen zusätzlich verringert.

Des Weiteren ist eine Regelungseinrichtung 80 vorgesehen, die über entsprechende Kommunikationsleitungen 81, 82 mit der ersten Antriebseinrichtung 77 und der zweiten Antriebseinrichtung 46 kommunizieren kann. Auf diese Weise ist die Regelungseinrichtung 80 dazu in der Lage, sowohl den Schlitten 40 parallel zu der Transportrichtung T zu verfahren, als auch eine Relativbewegung zwischen der Hebelscheibe 60 und dem Endloselement 70 zu regeln. Wird der Schlitten 40 parallel zu der Transportrichtung T verfahren, wird entsprechend auch die Hebelscheibe 60 parallel zu der Transportrichtung T verfahren. Wird das Endloselement 70 während dieser Bewegung stillstehen, würde sich die Hebelscheibe 60 an dem stillstehenden Endloselement 70 drehen und so würde allein aufgrund der Bewegung des Schlittens 40 eine daher ungewollte Bewegung des Oberstempels 54 und des Unterstempels 56 hervorgerufen. Daher wäre in dem Fall, dass der Schlitten 40 bewegt werden soll, ohne dass der Oberstempel 54 und der Unterstempel 56 eine Bewegung in Richtung des Pfeils 58 vollführen, das Endloselement 70 mittels der ersten Antriebseinrichtung 77 entsprechend derart anzutreiben, dass keinerlei Relativbewegung zwischen dem Endloselement 70 und der Hebelscheibe 60 erfolgt, so dass sich die Hebelscheibe 60 aufgrund der Bewegung des Schlittens 40 nicht dreht. Des Weiteren ist es so natürlich möglich, auch bei einem sich bewegenden Schlitten 40 durch eine entsprechende Geschwindigkeitsvorgabe der Regelungseinrichtung 80 an die erste Antriebseinrichtung 77 gewollt eine Relativbewegung zwischen der Hebelscheibe 60 und dem Endloselement 70 hervorzurufen, so dass sich die Hebelscheibe 60 gewollt in die gewünschte Richtung dreht, um so ein Öffnen bzw. Schließen des Oberstempels 54 und des Unterstempels 56 der Quertrennschweißeinrichtung 22 hervorzurufen.

Des Weiteren kann die Regelungseinrichtung 80 mit den Transporteinrichtungen 35, 50 kommunizieren. Die Regelungseinrichtung 80 ist dann dazu ausgebildet, eine jeweilige Geschwindigkeit der Transporteinrichtungen 35, 50 zu regeln und so einen Abstand zwischen Packgütern 12 zu beeinflussen. In der dargestellten Ausführungsform ist die Geschwindigkeit der Einlauftransporteinrichtung 50 jedoch konstant. Auf diese Weise kann sichergestellt werden, dass die Packgüter 12 dann auf der Auslauftransporteinrichtung 35 in gleichen Abständen angeordnet sind, wie im Folgenden noch erläutert wird.

Des Weiteren weist die Verpackungsmaschine das erste Rollenpaar 20 auf, das eine erste Rolle 84 und eine zweite Rolle 86 aufweist. Die erste Rolle 84 ist oberhalb der Folienebene 18' angeordnet. Die zweite Rolle 86 ist unterhalb der Folienebene 18' angeordnet. Die erste Rolle 84 und die zweite Rolle 86 sind freilaufend ausgebildet. In das Rollenpaar 20 laufen die obere Folienbahn 14 und die untere Folienbahn 16 ein und bilden so einen sogenannten "Folienvorhang", in den das Packgut 12 einläuft, indem es von der Transportvorrichtung 50 hineingeschoben wird. Das Rollenpaar 20 ist vor der Quertrennschweißeinrichtung 22 bzw. stromaufwärts der Quertrennschweißeinrichtung 22 bezüglich der Transportrichtung T angeordnet. Die dargestellte Beabstandung von der Quertrennschweißeinrichtung 22 ist lediglich beispielhaft zu verstehen, das Rollenpaar 20 muss lediglich genügend weit vor der Quertrennschweißeinrichtung 22 angeordnet sein, so dass sich in dem Bereich des Oberstempels 54 und des Unterstempels 56 ein Verlauf der aus der oberen Folienbahn 14 und der unteren Folienbahn 16 gebildeten Umverpackung im Wesentlichen parallel zu der Transportrichtung T und in der Folienebene 18' ergibt.

Um dies zu gewährleisten, kann ein weiteres Rollenpaar 88 mit einer ersten Rolle 90 und einer zweiten Rolle 92 angeordnet sein. Die erste Rolle 90 ist dabei oberhalb der Folienebene 18' angeordnet und die zweite Rolle 92 ist unterhalb der Folienebene 18' angeordnet. Die obere Rolle 84, 90 eines Rollenpaars 20, 88 und die untere Rolle 86, 92 eines Rollenpaars 20, 88 führen somit die Folienbahnen 14, 16 derart, dass sie in der Folienebene 18' im Bereich der Quertrennschweißeinrichtung 22 verläuft. Auch die Rollen 90, 92 sind freilaufend ausgebildet.

10

Des Weiteren ist ein optischer erster Sensor 94 vorgesehen, der ein Einlaufen eines Packguts 12 in den aus der oberen Folienbahn 14 und der unteren Folienbahn 16 gebildeten Folienvorhang detektieren kann. Des Weiteren dient ein zweiter, insbesondere optischer, Sensor 96 dazu, einen Ist-Abstand zwischen den einlaufenden Packgütern 12 zu bestimmen und so der Regelungseinrichtung 80 die Einstellung des Abstands durch entsprechende Regelung der Geschwindigkeiten der Auslauftransporteinrichtung 35 und der mitlaufenden Quertrennschweißeinrichtung 22 zu ermöglichen. Dazu kommuniziert die Sensoren 94, 96 mit der Regelungseinrichtung 80. Der optische Sensor 94 ist derart angeordnet und ausgerichtet, dass er detektieren kann, wann ein Packgut 12 in den Folienvorhang einläuft. Grundsätzlich ist es auch möglich, den Sensor 94 wegzulassen. Dies gilt insbesondere, wenn die Geschwindigkeit der Einlauftransporteinrichtung 50 konstant ist. Aus der bekannten Position des Sensors 96 lässt sich die Position einer Vorderkante des Packguts 12 auch basierend auf der Geschwindigkeit der Einlauftransporteinrichtung 50 und der verstrichenen Zeit fortschreiben. Somit muss nicht zwingend ein tatsächliches Einlaufen in den Folienvorhang durch den Sensor 94 überprüft werden.

Um eine Regelung des Abstands der Packgüter 12 auf der Auslauftransporteinrichtung 35 mittels der Regelungseinrichtung 80 bei einem Übergang der Packgüter von der Einlauftransporteinrichtung 50 auf die Auslauftransporteinrichtung 35 zu ermöglichen, sollte ein Abstand $S_F$ des Sensors 96 von der Auslaufposition 33 der mitlaufenden Quertrennschweißeinrichtung 22 der Summe aus einer maximal zu verarbeitenden Packgutlänge und dem doppelten des gewünschten Soll-Abstands der Packgüter 12 zueinander betragen.

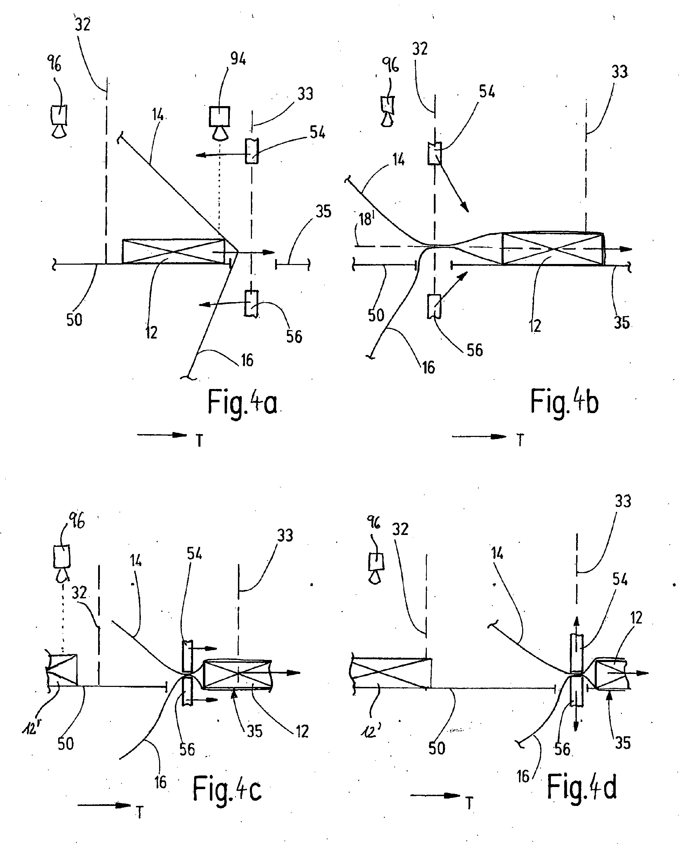

Die Fig. 4a bis 4d zeigen schematisch einen Ablauf eines Quertrennschweißvorgangs in der dargestellten Verpackungsmaschine 10. In der schematischen Darstellung in den Fig. 4a bis 4d sind aus Gründen der Übersicht lediglich das Packgut, der ungefähre Verlauf der Folienbahnen 14, 16 und die Position des Oberstempels 54 und des Unterstempels 56 der Quertrennschweißeinrichtung 22 dargestellt.

Die Fig. 4a zeigt die Quertrennschweißeinrichtung zunächst in ihrer Ausgangsstellung bzw. ihrer Grundstellung. Diese nimmt sie in dem Auslaufpunkt 33 ein. Das Packgut 12 fährt hier in den aus den Folienbahnen 14, 16 gebildeten Folienvorhang ein, was mittels der optischen Sensoren 94, 96 detektiert wird. Das Packgut bewegt sich dabei weiter stromabwärts in die Transportrichtung T. Sobald das Einfahren des Packguts 12 in den Folienvorhang detektiert wurde, wird die mitlaufende Quertrennschweißeinrichtung und damit der Oberstempel 54 und der Unterstempel 56 stromaufwärts, d.h. gegenläufig zu dem Packgut 12, bewegt.

Der Oberstempel 54 und der Unterstempel 56 nehmen dann die in der Fig. 4b dargestellte Position in dem Einlaufpunkt 32 ein. Das Packgut 12 und die Quertrennschweißeinrichtung 22 haben sich mittlerweile durch ihre gegenläufigen Bewegungen aneinander vorbeibewegt. Das Packgut 12 ist in die Folienbahnen 14, 16 eingefahren und hat eine notwendige Menge an Folie abgenommen. Die Folienbahnen 14, 16 werden selbstverständlich durch die Rollenpaare 20, 88 geführt, so dass sich im Bereich der Quertrennschweißeinrichtung 22 bzw. des Oberstempels 54 und des Unterstempels 56 ein Verlauf der Folienbahnen 14, 16 ergibt, der im Wesentlichen parallel zu der Transportrichtung T in der Folienebene 18' verläuft. Der Oberstempel 54 und der Unterstempel 56 werden nun geschlossen, d.h. der Oberstempel 54 und der Unterstempel 56 bewegen sich auf einander zu, so dass sie sich in der Folienebene 18' treffen und die Folienbahnen 13, 16 trennen und verschweißen. Das Packgut 12 bewegt sich weiter in die Transportrichtung T. Während des Schließens werden der Oberstempel 54 und der Unterstempel 56 ebenfalls in die Transportrichtung T bewegt und können insbesondere gegenüber dem Packgut 12 relativ in die Transportrichtung T bewegt werden. Der Oberstempel 44 und der Unterstempel 56 werden somit quasi "von hinten" in das Packgut 12 heranbewegt, während sie sich schließen.

Die Anordnung nimmt dann die in der Fig. 4c dargestellte Lage ein. Das Packgut 12 bewegt sich weiter stromab, während der Oberstempel 54 und der Unterstempel 56 geschlossen sind. In dieser geschlossenen Anordnung bewegen sich der Oberstempel 54 und der Unterstempel 56 sowie die gesamte Quertrennschweißeinrichtung 22 mit derselben Geschwindigkeit wie das Packgut 12 in die Transportrichtung T. Nun findet ein entsprechender Quertrennschweißvorgang in der Folienbahn 14, 16 statt.

Die Anordnung nimmt dann die in der Fig. 4d dargestellte Stellung ein. Die Quertrennschweißeinrichtung ist wieder in den Auslaufpunkt 33 bewegt und der Quertrennschweißvorgang ist abgeschlossen. Die Folienbahnen 14, 16 sind verschweißt und getrennt. Der Oberstempel 54 und der Unterstempel 56 werden nun wieder geöffnet, so dass sich die in der Fig. 4a dargestellte Ausgangsstellung ergibt und ein nachfolgendes Packgut verarbeitet werden kann.

Beispielhaft ist des Weiteren in den Fig. 4c und 4d angedeutet, dass ein nachfolgendes Packgut 12', das auf das Packgut 12 folgt, von dem Sensor 96 erfasst und folglich der Ist-Abstand zwischen den Packgütern 12, 12' ermittelt werden kann. Der dargestellte Ist-Abstand ist lediglich beispielhaft zu verstehen, selbstverständlich kann es auch vorkommen, dass das nachfolgende Packgut 12' bereits früher, beispielsweise schon in dem in der Fig. 4b dargestellten Zustand in den Bereich des Sensors 96 einläuft.

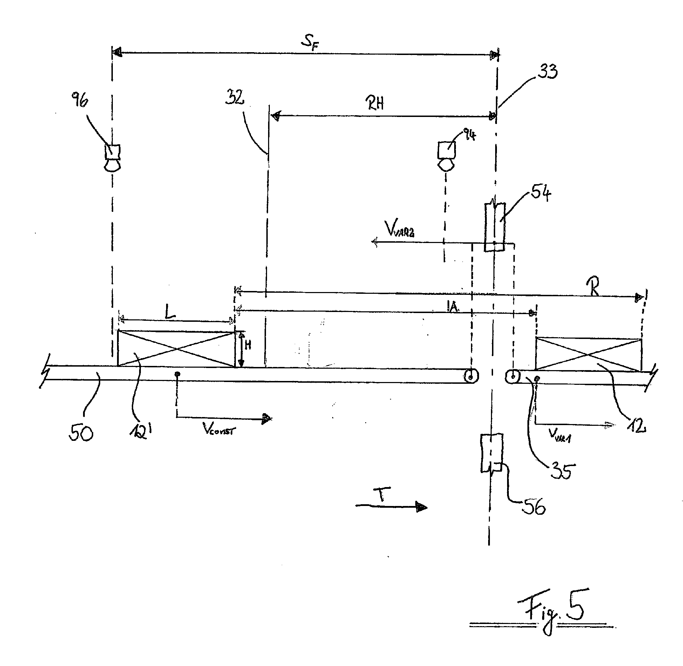

In der Fig. 5 sind schematisch die für die Regelung der Geschwindigkeit der Auslauftransporteinrichtung 35 und der Geschwindigkeit der mitlaufenden Quertrennschweißeinrichtung 22 relevanten Größen dargestellt. Die entsprechenden Zusammenhänge werden dabei im Folgenden erläutert.

Grundsätzlich ist vorgesehen, dass ein Nutzer eine Länge L und eine Höhe H der zu verarbeitenden Packgüter 12, 12' vorgibt. Es kann dann vorgesehen sein, dass der Rapport nach der Formel Rapport = Länge (L) + Höhe (H) + 40 mm festgelegt wird. Hierbei handelt es sich dann um den Soll-Rapport. Ein Ist-Rapport ist in der Fig. 5 beispielhaft mit R bezeichnet. Unter dem Rapport versteht man den Abstand von der Vorderkante eines Packguts 12 zu der Vorderkante des nachfolgenden Packguts 12'. Unter einem Ist-Abstand IA versteht man den Abstand zwischen der Hinterkante des Packguts 12 und der Vorderkante des nachfolgenden Packguts 12'. Für den Ist-Abstand IA ergibt sich somit, dass der Ist-Abstand gleich dem Ist-Rapport minus der Packgutlänge L ist.

Entsprechend ergibt sich für den Soll-Abstand, dass dieser gleich dem Soll-Rapport minus der eingestellten Packgutlänge L ist. Mit anderen Worten entspricht der Soll-Abstand in einer Ausgestaltung damit der Höhe H der Packgüter 12, 12' zuzüglich 40 mm.

In der Praxis hat sich herausgestellt, dass für den Abstand der Quertrennschweißeinrichtung 22 in ihrer Auslaufposition 33 zu dem Sensor 36 zur Ermittlung des Ist-Abstands ein Abstand $S_F$ gegeben sein sollte, der die Summe aus einer maximal zu verarbeitenden Packgutlänge und dem Doppelten des gewünschten Soll-Abstands der Packgüter 12, 12', insbesondere dem maximalen vorgebbaren Soll-Abstand der Packgüter 12, 12', entspricht.

Des Weiteren hat sich gezeigt, dass für einen Rückhub RH, d.h. dem Abstand zwischen dem Einlaufpunkt 32 und dem Auslaufpunkt 33 der Quertrennschweißeinrichtung 22 gelten sollte, dass der Rückhub RH gleich Soll-Rapport geteilt durch 2,4 ist. Damit ergibt sich, dass bei einem größeren eingestellten Soll-Rapport der Rückhub der Quertrennschweißeinrichtung 22 größer wird. Dies ist notwendig, damit genügend Strecke verfügbar bleibt, in der die Quertrennschweißeinrichtung 22 in geschlossenem Zustand dem Packgut 12, 12' folgen kann, um die Folienbahn 14, 16 zu verschweißen und des Weiteren, um möglichst wenig Situationen hervorzurufen, in denen die Quertrennschweißeinrichtung 22 stillstehen muss.

Da der Abstand $S_F$ sowie eine Geschwindigkeit $V_{CONST}$ der Einlauftransporteinrichtung 50 konstant ist, kann auf diese Weise ermittelt werden, wie der Geschwindigkeitsverlauf der Quertrennschweißeinrichtung 22 während des Rückhubs sein muss, damit bei gegebener Rückhubstrecke RH das nachfolgende Packgut 12' eine Relativbewegung zu der Quertrennschweißeinrichtung 22 durchführen bzw. "aufholen" kann. Für die Relativbewegung zwischen Quertrennschweißeinrichtung 22 und nachfolgendem Packgut 12' ergibt sich, dass die gesamte Strecke $S_F$ gleich der Geschwindigkeit $V_{CONST}$ der Einlauftransporteinrichtung 50 mal der verstrichenen Zeit t ab Durchlauf der Vorderkante des Packguts 12' durch den Sensor 96 plus der gleichen Zeit t mal der Geschwindigkeit $V_{VAR2}$ der Quertrennschweißeinrichtung 22 entgegengesetzt zu der Transportrichtung T ist. Da die Geschwindigkeit $V_{VAR2}$ nicht linear ist, gilt entsprechend Formel $S_F = \int\limits_{\Delta t} (V_{CONST} + V_{VAR2})\, dt$.

Auf diese Weise kann ermittelt und vorher berechnet werden, inwieweit der Geschwindigkeitsverlauf von $V_{VAR2}$ herabgesetzt werden muss, wenn der Ist-Abstand IA größer als der Soll-Abstand ist, damit das Packgut 12' den Ist-Abstand auf den Soll-Abstand verkürzt hat, wenn das Packgut 12' über die Stempellücke von der Einlauftransporteinrichtung 50 auf die Auslauftransporteinrichtung 35 gelangt.

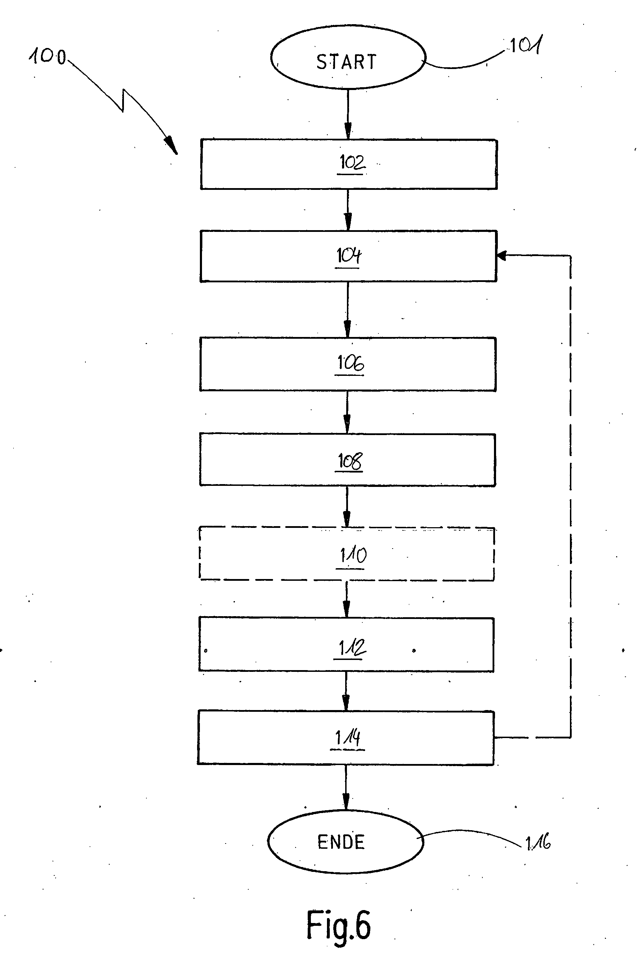

In Fig. 6 ist schematisch der Ablauf eines Verfahrens 100 zum Regeln des Abstands zwischen aufeinanderfolgenden Packgütern 12, 12' in einer Verpackungsmaschine 10 in einer Ausführungsform dargestellt.

Das Verfahren 100 beginnt in einem Startschritt 101. Zunächst erfolgt in einem Schritt 102 die Eingabe der die Packgüter 12, 12' betreffenden Daten, insbesondere die Länge sowie die Höhe. Selbstverständlich kann auch die Breite der Packgüter 12, 12' eingegeben werden, dies hat jedoch keinen Einfluss auf die Abstandsregelung. Aus der Länge und der Höhe ergibt sich dann gemäß der voranstehend dargelegten Zusammenhänge der Rapport und der Soll-Abstand. Alternativ kann auch vorgesehen sein, dass der Rapport bzw. der Soll-Abstand direkt eingegeben werden.

In einem Schritt 104 befindet sich die Verpackungsmaschine 10 dann in ihrer Ausgangsstellung, d. h. die Quertrennschweißeinrichtung 22 befindet sich in ihrer Ausgangsstellung in dem Auslaufpunkt 33, d.h. ihrer stromabwärts gelegenen Extremstellung.

Der Abstand $S_F$ eines Sensors 96 zum Ermitteln des Ist-Abstands zu einer Ausgangsstellung der Quertrennschweißeinrichtung 22 ist bekannt. Gemäß den voranstehend dargelegten Zusammenhängen ergibt sich des Weiteren aus dem eingestellten Soll-Rapport der Schlittenweg bzw. Rückhub RH der Quertrennschweißeinrichtung 22.

Es laufen dann die Packgüter 12, 12' in die Verpackungsmaschine 10 ein. In einem Schritt 106 wird der Ist-Abstand zwischen zwei aufeinanderfolgenden Packgütern 12, 12' bestimmt. Insbesondere geschieht dies mit Hilfe des Sensors 96.

In einem Schritt 108 wird dann abhängig von dem ermittelten Ist-Abstand und dem unmittelbar oder mittelbar vorgegebenen Soll-Abstand aus einem Speicher ausgelesen, welche Geschwindigkeitskurven die mitlaufende Quertrennschweißeinrichtung 22 und die Auslauftransporteinrichtung 35 abfahren müssen, um den Ist-Abstand auf den Soll-Abstand zu verringern. Wenn der Ist-Abstand gleich oder mehr als doppelt so groß wie der eingestellte Soll-Abstand ist, werden die Auslauftransporteinrichtung 35 und die mitlaufende Quertrennschweißeinrichtung 22 für eine bestimmte Zeitdauer angehalten.

In einem Schritt 112 werden dann die abgefragten Geschwindigkeitskurven von der mitlaufenden Quertrennschweißeinrichtung 22 und von der Auslauftransporteinrichtung 35 abgefahren. Wurden die mitlaufenden Quertrennschweißeinrichtung 22 und die Auslauftransporteinrichtung 35 in einem vorhergehenden Schritt 110 angehalten, werden entsprechend dann die für den größten Ist-Abstand, d.h. den doppelten Soll-Abstand hinterlegten Kurven abgefahren. Der Rückhub der mitlaufenden Quertrennschweißeinrichtung 22 ist nun abgeschlossen.

In einem Schritt 114 bewegt sich die Quertrennschweißeinrichtung 22 somit wieder in Richtung der Transportrichtung T und es erfolgt der Quertrennschweißvorgang. Dabei findet während des Quertrennschweißens keine Relativbewegung zwischen dem Packgut 12' und dem Oberstempel 54 und dem Unterstempel 56 statt.

Am Ende des Quertrennschweißvorgangs befindet sich die Quertrennschweißeinrichtung 22 wieder in ihrer Ausgangsstellung im Auslaufpunkt 33 im Schritt 104 und der Vorgang wird für ein weiteres nachfolgendes Packgut (nicht dargestellt) fortgeführt. Der Ist-Abstand zu diesem Packgut wurde dabei abhängig von der Größe des Ist-Abstands ggf. schon während einer der Schritte 112 oder 114 ermittelt. Wurde in der Ausgangsstellung im Schritt 104 noch kein weiteres Packgut detektiert, werden die Auslauftransporteinrichtung 35 und die Quertrennschweißeinrichtung 22 so lange angehalten, bis wieder ein Packgut durch den Sensor 96 tritt und ein Ist-Abstand im Schritt 106 bestimmt werden kann.

Soll überhaupt kein nachfolgendes Packgut mehr verpackt werden, endet das Verfahren in einem Schritt 116.

## Patentansprüche

**1.** Verpackungsmaschine (10) zum Verpacken eines Packguts (12, 12') mit einer Umverpackung (14, 16), mit einer Einlauftransporteinrichtung (50) und einer Auslauftransporteinrichtung (35) zum Transportieren des Packguts (12, 12') in einer Transportrichtung (T), mit einer Quertrennschweißeinrichtung (22) zum Verschweißen der Umverpackung (14, 16) quer zu der Transportrichtung (T), wobei die Einlauftransporteinrichtung (50) derart ausgebildet ist, dass sie das Packgut (12, 12') zu der Quertrennschweißeinrichtung (22) hintransportiert, wobei die Auslauftransporteinrichtung (35) derart ausgebildet ist, dass sie das Packgut (12, 12') von der Quertrennschweißeinrichtung (22) wegtransportiert, wobei die Verpackungsmaschine (10) eine Regelungseinrichtung (80) aufweist, die dazu ausgebildet ist, eine Geschwindigkeit der mitlaufenden Quertrennschweißeinrichtung (22) und eine Geschwindigkeit der Auslauftransporteinrichtung (35) relativ zu einer Geschwindigkeit der Einlauftransporteinrichtung (50) zu regeln, **dadurch gekennzeichnet, dass** die Verpackungsmaschine (10) zwei Längstrennschweißeinrichtungen (24, 24') zum Verschweißen der Umverpackung (14, 16) parallel zu der Transportrichtung (T) aufweist, wobei die Quertrennschweißeinrichtung (22) in der Transportrichtung (T) vor den Längstrennschweißeinrichtungen (24, 24') angeordnet ist, wobei die Quertrennschweißeinrichtung (22) als zwischen einem Einlaufpunkt (32) und einem Auslaufpunkt (33) mitlaufende Quertrennschweißeinrichtung (22) ausgebildet ist, die ihre Ausgangsstellung in dem Auslaufpunkt (33) einnimmt, und wobei in der Regelungseinrichtung (80) ein Soll-Abstand zwischen einem Packgut (12) und einem nachfolgenden Packgut (12') hinterlegt ist, und die Regelungseinrichtung (80) derart ausgebildet ist, dass sie, wenn ein von einer Sensoreinrichtung (96) ermittelter Ist-Abstand größer als der Soll-Abstand ist, die Geschwindigkeit der mitlaufenden Quertrennschweißeinrichtung (22) und die Geschwindigkeit der Auslauftransporteinrichtung (35) derart verringert, dass sich zwischen dem auf der Auslauftransporteinrichtung (35) angeordneten Packgut (12) und dem nachfolgenden, auf der Einlauftransporteinrichtung (50) angeordneten Packgut (12') der Soll-Abstand einstellt.

**2.** Verpackungsmaschine nach Anspruch 1, **dadurch gekennzeichnet, dass** die Verpackungsmaschine (10) des Weiteren eine Sensoreinrichtung (96) aufweist, um einen Ist-Abstand zwischen einem Packgut (12) und einem nachfolgenden Packgut (12') zu ermitteln.

**3.** Verpackungsmaschine nach Anspruch 1 oder 2, **dadurch gekennzeichnet, dass** die Regelungseinrichtung (80) derart ausgebildet ist, dass sie die Geschwindigkeit der mitlaufenden Quertrennschweißeinrichtung (22) und/oder die Geschwindigkeit der Auslauftransporteinrichtung (35) regelt, indem sie einen jeweiligen absoluten Geschwindigkeitswert herabsetzt und den jeweiligen charakteristischen Verlauf der Geschwindigkeit beibehält.

**4.** Verpackungsmaschine nach einem der Ansprüche 1 bis 3, **dadurch gekennzeichnet, dass** in der Regelungseinrichtung (80) von einem Soll-Abstand zwischen einem Packgut (12) und einem nachfolgenden Packgut (12') und einem Ist-Abstand zwischen dem Packgut (12) und dem nachfolgenden Packgut (12') abhängige Geschwindigkeitskurven für die Geschwindigkeit der mitlaufenden Quertrennschweißeinrichtung (22) und/oder der Geschwindigkeit der Auslauftransporteinrichtung (35) hinterlegt sind, um den Ist-Abstand auf den Soll-Abstand einzustellen.

5. Verpackungsmaschine nach einem der Ansprüche 1 bis 4, **dadurch gekennzeichnet, dass** die Regelungseinrichtung derart ausgebildet ist, dass sie bei einer Regelung der mitlaufenden Quertrennschweißeinrichtung (22) lediglich einen absoluten Geschwindigkeitswert der Geschwindigkeit der mitlaufenden Quertrennschweißeinrichtung (22) bei einer Bewegung der mitlaufenden Quertrennschweißeinrichtung (22) entgegengesetzt zu der Transportrichtung (T) verringert.

6. Verpackungsmaschine nach einem der Ansprüche 1 bis 5, **dadurch gekennzeichnet, dass** die Regelungseinrichtung (80) derart ausgebildet ist, dass sie eine Geschwindigkeit der mitlaufenden Quertrennschweißeinrichtung (22) bei einer Bewegung der mitlaufenden Quertrennschweißeinrichtung (22) entgegengesetzt zu der Transportrichtung (T) derart regelt, dass sich für den dazugehörigen Verlauf der Beschleunigung der Quertrennschweißeinrichtung (22) der charakteristische Verlauf einer vollständigen Sinusschwingung ergibt.

7. Verpackungsmaschine nach einem der Ansprüche 1 bis 6, **dadurch gekennzeichnet, dass** die Regelungseinrichtung (80) derart ausgebildet ist, dass sie die Geschwindigkeit der Quertrennschweißeinrichtung (22) und die Geschwindigkeit der Auslauftransporteinrichtung für eine vorbestimmte Zeitdauer auf Null verringert, wenn der Ist-Abstand zwischen einem Packgut (12) und einem nachfolgenden Packgut (12') größer oder gleich dem zweifachen des Soll-Abstandes zwischen dem Packgut (12) und dem nachfolgenden Packgut (12') ist.

8. Verpackungsmaschine nach einem der Ansprüche 1 bis 7, **dadurch gekennzeichnet, dass** eine Geschwindigkeit der Einlauftransporteinrichtung (50) konstant ist.

9. Verfahren (100) zum Einstellen eines Abstandes zwischen aufeinanderfolgenden Packgütern (12, 12'), bei dem das Packgut (12) in einer Transportrichtung (T) transportiert wird, wobei das Packgut (12, 12') auf einer Einlauftransporteinrichtung (50) zu der Quertrennschweißeinrichtung (22) hintransportiert wird, und wobei das Packgut (12, 12') auf einer Auslauftransporteinrichtung (35) von der Quertrennschweißeinrichtung (22) wegtransportiert wird, wobei eine Geschwindigkeit der mitlaufenden Quertrennschweißeinrichtung (22) und eine Geschwindigkeit der Auslauftransporteinrichtung (35) relativ zu einer Geschwindigkeit der Einlauftransporteinrichtung (50) geregelt wird, **dadurch gekennzeichnet, dass** das Packgut (12, 12') bezüglich der Transportrichtung (T) nach einer Quertrennschweißeinrichtung (22) zu zwei Längstrennschweißeinrichtungen (24, 24') transportiert wird; dass die Quertrennschweißeinrichtung (22) parallel zu der Transportrichtung (T) zwischen einem bezüglich der Transportrichtung (T) stromauf gelegenen Einlaufpunkt (32) und einem stromab gelegenen Auslaufpunkt (33) bewegt wird, wobei die Quertrennschweißeinrichtung (22) ihre Ausgangsstellung in dem Auslaufpunkt (33) einnimmt; und dass des Weiteren ein Ist-Abstand zwischen einem Packgut (12) und einem nachfolgenden Packgut (12') ermittelt wird, und, wenn der Ist-Abstand größer als ein Soll-Abstand ist, die Geschwindigkeit der mitlaufenden Quertrennschweißeinrichtung (22) und die Geschwindigkeit der Auslauftransporteinrichtung (35) derart verringert wird, dass sich zwischen dem auf der Auslauftransporteinrichtung (35) angeordneten Packgut (12) und dem nachfolgenden, auf der Einlauftransporteinrichtung (50) angeordneten Packgut (12') der Soll-Abstand einstellt.

10. Verfahren nach Anspruch 9, **dadurch gekennzeichnet, dass** die Geschwindigkeit der mitlaufenden Quertrennschweißeinrichtung (22) und/oder die Geschwindigkeit der Auslauftransporteinrichtung (35) geregelt werden, indem ein jeweiliger absoluter Geschwindigkeitswert herabgesetzt wird und ein jeweiliger charakteristischer Verlauf der Geschwindigkeit beibehalten wird.

11. Verfahren nach Anspruch 9 oder 10, **dadurch gekennzeichnet, dass** von einem Soll-Abstand zwischen einem Packgut (12) und einem nachfolgenden Packgut (12') und von einem Ist-Abstand zwischen dem Packgut (12) und dem nachfolgenden Packgut (12') abhängige Geschwindigkeitskurven für die Geschwindigkeit der mitlaufenden Quertrennschweißeinrichtung (22) und/oder für die Geschwindigkeit der Auslauftransporteinrichtung (35) abgefragt werden, um den Ist-Abstand auf den Soll-Abstand einzustellen.

12. Verfahren nach einem der Ansprüche 9 bis 11, **dadurch gekennzeichnet, dass** bei einer Regelung der mitlaufenden Quertrennschweißeinrichtung (22) lediglich ein absoluter Geschwindigkeitswert der Geschwindigkeit der mitlaufenden Quertrennschweißeinrichtung (22) bei einer Bewegung der mitlaufenden Quertrennschweißeinrichtung (22) entgegengesetzt zu der Transportrichtung (T) verringert wird.

13. Verfahren nach einem der Ansprüche 9 bis 12, **dadurch gekennzeichnet, dass** die Geschwindigkeit der Quertrennschweißeinrichtung (22) und die Geschwindigkeit der Auslauftransporteinrichtung (35) für eine vorbestimmte Zeitdauer auf Null verringert wird, wenn der Ist-Abstand zwischen einem Packgut (12) und einem nachfolgenden Packgut (12') größer oder gleich dem zweifachen des Soll-Abstandes zwischen dem Packgut (12) und dem nachfolgenden Packgut (12') ist.

## Claims

1. Packaging machine (10) for packaging a packaged item (12, 12') with secondary packaging (14, 16), with a run-in transportation device (50) and a run-out transportation device (35) for transporting the packaged item (12, 12') in a transportation direction (T), with a transverse cutting/welding device (22) for welding the secondary packaging (14, 16) transversely with respect to the transportation direction (T), wherein the run-in transportation device (50) is embodied in such a way that it transports the packaged item (12, 12') to the transverse cutting/welding device (22), wherein the run-out transportation device (35) is embodied in such a way that it transports the packaged item (12, 12') away from the transverse cutting/welding device (22), wherein the packaging machine (10) has a regulating device (80) which is designed to regulate a speed of the running-along transverse cutting/welding device (22) and a speed of the run-out transportation device (35) relative to a speed of the run-in transportation device (50), **characterized in that** the packaging machine (10) has two longitudinal cutting/welding devices (24, 24') for welding the secondary packaging (14, 16) parallel to the transportation direction (T), wherein the transverse cutting/welding device (22) is arranged ahead of the longitudinal cutting/welding devices (24, 24') in the transportation direction (T), wherein the transverse cutting/welding device (22) is embodied as a running-along transverse cutting/welding device (22) between a run-in point (32) and a run-out point (33) and which assumes its output position at the run-out point (33), and wherein a setpoint distance between one packaged item (12) and a subsequent packaged item (12') is stored in the regulating device (80) and the regulating device (80) is embodied in such a way that when an actual distance which is determined by a sensor device (96) is greater than the setpoint distance it reduces the speed of the running-along transverse cutting/welding device (22) and the speed of the run-out transportation device (35) in such a way that the setpoint distance is set between the packaged item (12) arranged on the run-out transportation device (35) and the subsequent packaged item (12') arranged on the run-in transportation device (50).

2. Packaging machine according to Claim 1, **characterized in that** the packaging machine (10) also has a sensor device (96) in order to determine an actual distance between a packaged item (12) and a subsequent packaged item (12').

3. Packaging machine according to Claim 1 or 2, **characterized in that** the regulating device (80) is embodied in such a way that it regulates the speed of the running-along transverse cutting/welding device (22) and/or the speed of the run-out transportation device (35) by decreasing a respective absolute speed value and maintaining the respective characteristic profile of the speed.

4. Packaging machine according to one of Claims 1 to 3, **characterized in that** speed curves, dependent on a setpoint distance between a packaged item (12) and a subsequent packaged item (12') and an actual distance between the packaged item (12) and the subsequent packaged item (12'), for the speed of the transverse cutting/welding device (22) and/or the speed of the run-out transportation device (35) are stored in the regulating device (80) in order to set the actual distance to the setpoint distance.

5. Packaging machine according to one of Claims 1 to 4, **characterized in that** the regulating device is embodied in such a way that during a process of regulating the running-along transverse cutting/welding device (22) said regulating device reduces only an absolute speed value of the speed of the running-along transverse cutting/welding device (22) during a movement of the running-along transverse cutting/welding device (22) which is opposed to the transportation direction (T).

6. Packaging machine according to one of Claims 1 to 5, **characterized in that** the regulating device (80) is embodied in such a way that it regulates a speed of the running-along transverse cutting/welding device (22) during a movement of the running-along transverse cutting/welding device (22), which is opposed to the transportation direction (T), in such a way that the characteristic profile of a complete sinusoidal oscillation is obtained for the associated profile of the acceleration of the transverse cutting/welding device (22).

7. Packaging machine according to one of Claims 1 to 6, **characterized in that** the regulating device (80) is embodied in such a way that it reduces the speed of the transverse cutting/welding device (22) and the speed of the run-out transportation device to zero for a predetermined time period if the actual distance between a packaged item (12) and a subsequent packaged item (12') is greater than or equal to twice the setpoint distance between the packaged item (12) and the subsequent packaged item (12').

8. Packaging machine according to one of Claims 1 to 7, **characterized in that** a speed of the run-in transportation device (50) is constant.

9. Method (100) for setting a distance between successive packaged items (12, 12'), in which the packaged item (12) is transported in a transportation direction (T), wherein the packaged item (12, 12') is transported to the transverse cutting/welding device (22) on a run-in transportation device (50), and wherein the packaged item (12, 12') is transported away from the transverse cutting/welding device (22) on a run-out transportation device (35), wherein a speed of the running-along transverse cutting/welding device (22) and a speed of the run-out transportation device (35) is regulated relative to a speed of the run-in transportation device (50), **characterized in that** the packaged item (12, 12') is transported to two longitudinal cutting/welding devices (24, 24') with respect to the transportation direction (T) from a transverse cutting/welding device (22); **in that** the transverse cutting/welding device (22) is moved parallel to the transportation direction (T) between a run-in point (32) located upstream with respect to the transportation direction (T) and a run-out point (33) located downstream, wherein the transverse cutting/welding device (22) assumes its home position at the run-out point (33); and **in that** an actual distance between a packaged item (12) and a subsequent packaged item (12') is also determined, and if the actual distance is greater than a setpoint distance the speed of the running-along transverse cutting/welding device (22) and the speed of the run-out transportation device (35) are reduced in such a way that the setpoint distance is set between the packaged item (12) arranged on the run-out transportation device (35) and the subsequent packaged item (12') arranged on the run-in transportation device (50).

10. Method according to Claim 9, **characterized in that** the speed of the running-along transverse cutting/welding device (22) and/or the speed of the run-out transportation device (35) are regulated by decreasing a respective absolute speed value, maintaining a respective characteristic profile of the speed.

11. Method according to Claim 9 or 10, **characterized in that** speed curves, dependent on a setpoint distance between a packaged item (12) and a subsequent packaged item (12') and on an actual distance between the packaged item (12) and the subsequent packaged item (12'), for the speed of the running-along transverse cutting/welding device (22) and/or for the speed of the run-out transportation device (35) are interrogated in order to set the actual distance to the setpoint distance.

12. Method according to one of Claims 9 to 11, **characterized in that** during a process of regulating the running-along transverse cutting/welding device (22) only an absolute speed value of the speed of the running-along transverse cutting/welding device (22) during a movement of the running-along transverse cutting/welding device (22) in the opposite direction to the transportation direction (T) is reduced.

13. Method according to one of Claims 9 to 12, **characterized in that** the speed of the transverse cutting/welding device (22) and the speed of the run-out transportation device (35) are reduced to zero for a predetermined time period if the actual distance between a packaged item (12) and a subsequent packaged item (12') is greater than or equal to twice the setpoint distance between the packaged item (12) and the subsequent packaged item (12').

**Revendications**

1. Machine d'emballage (10) pour l'emballage d'un produit à emballer (12, 12') avec un emballage (14, 16), comprenant un dispositif de transport d'entrée (50) et un dispositif de transport de sortie (35) pour le transport du produit à emballer (12, 12') dans une direction de transport (T), comprenant un dispositif de soudage-coupage transversal (22) pour le soudage de l'emballage (14, 16) transversalement à la direction de transport (T), le dispositif de transport d'entrée (50) étant réalisé de telle sorte qu'il transporte le produit à emballer (12, 12') au dispositif de soudage-coupage transversal (22), le dispositif de transport de sortie (35) étant réalisé de telle sorte qu'il évacue le produit à emballer (12, 12') depuis le dispositif de soudage-coupage transversal (22), la machine d'emballage (10) présentant un dispositif de régulation (80) qui est réalisé de manière à réguler une vitesse du dispositif de soudage-coupage transversal continu (22) et une vitesse du dispositif de transport de sortie (35) par rapport à une vitesse du dispositif de transport d'entrée (50), **caractérisée en ce que** la machine d'emballage (10) présente deux dispositifs de soudage-coupage longitudinal (24, 24') pour le soudage de l'emballage (14, 16) parallèlement à la direction de transport (T), le dispositif de soudage-coupage transversal (22) étant disposé dans la direction de transport (T) avant les dispositifs de soudage-coupage longitudinal (24, 24'), le dispositif de soudage-coupage transversal (22) étant réalisé en tant que dispositif de soudage-coupage transversal continu (22) entre un point d'entrée (32) et un point de sortie (33), qui adopte sa position de départ dans le point de sortie (33), et une distance de consigne entre un produit à emballer (12) et un produit à emballer suivant (12') étant consignée dans le dispositif de régulation (80), et le dispositif de régulation (80) étant réalisé de telle sorte que lorsqu'une distance réelle détectée par un dispositif de capteur (96) est supérieure à la distance de consigne, il réduise la vitesse du dispositif de soudage-coupage transversal continu (22) et la vitesse du dispositif de transport de sortie (35) de telle sorte que la distance de consigne s'établisse entre le produit à emballer (12) disposé sur le dispositif de transport de sortie (35) et le produit à emballer suivant (12') disposé sur le dispositif de transport d'entrée (50).

2. Machine d'emballage selon la revendication 1, **caractérisée en ce que** la machine d'emballage (10) présente en outre un dispositif de capteur (96) afin de détecter une distance réelle entre un produit à emballer (12) et un produit à emballer suivant (12').

3. Machine d'emballage selon la revendication 1 ou 2, **caractérisée en ce que** le dispositif de régulation (80) est réalisé de telle sorte qu'il régule la vitesse du dispositif de soudage-coupage transversal continu (22) et/ou la vitesse du dispositif de transport de sortie (35), en abaissant une valeur de vitesse absolue respective et en conservant l'allure caractéristique respective de la vitesse.

4. Machine d'emballage selon l'une quelconque des revendications 1 à 3, **caractérisée en ce que** dans le dispositif de régulation (80) sont consignées des courbes de vitesses dépendant d'une distance de consigne entre un produit à emballer (12) et un produit à emballer suivant (12') et d'une distance réelle entre le produit à emballer (12) et le produit à emballer suivant (12'), pour la vitesse du dispositif de soudage-coupage transversal continu (22) et/ou la vitesse du dispositif de transport de sortie (35), afin d'ajuster la distance réelle à la distance de consigne.

5. Machine d'emballage selon l'une quelconque des revendications 1 à 4, **caractérisée en ce que** le dispositif de régulation est réalisé de telle sorte que pour une régulation du dispositif de soudage-coupage transversal continu (22), il ne réduise qu'une valeur de vitesse absolue de la vitesse du dispositif de soudage-coupage transversal continu (22) dans le cas d'un déplacement du dispositif de soudage-coupage transversal continu (22) dans le sens inverse de la direction de transport (T).

6. Machine d'emballage selon l'une quelconque des revendications 1 à 5, **caractérisée en ce que** le dispositif de régulation (80) est réalisé de telle sorte qu'il régule une vitesse du dispositif de soudage-coupage transversal continu (22) lors d'un déplacement du dispositif de soudage-coupage transversal continu (22) dans le sens inverse de la direction de transport (T) de telle sorte que l'on obtienne pour l'allure associée de l'accélération du dispositif de soudage-coupage transversal (22), l'allure caractéristique d'un oscillation sinusoïdale complète.

7. Machine d'emballage selon l'une quelconque des revendications 1 à 6, **caractérisée en ce que** le dispositif de régulation (80) est réalisé de telle sorte qu'il réduise à zéro la vitesse du dispositif de soudage-coupage transversal (22) et la vitesse du dispositif de transport de sortie pendant une période de temps prédéfinie, si la distance réelle entre un produit à emballer (12) et un produit à emballer suivant (12') est supérieure ou égale au double de la distance de consigne entre le produit à emballer (12) et le produit à emballer suivant (12').

8. Machine d'emballage selon l'une quelconque des revendications 1 à 7, **caractérisée en ce qu'**une vitesse du dispositif de transport d'entrée (50) est constante.

9. Procédé (100) pour ajuster une distance entre des produits à emballer (12, 12') successifs, dans lequel le produit à emballer (12) est transporté dans une direction de transport (T), le produit à emballer (12, 12') étant transporté sur un dispositif de transport d'entrée (50) jusqu'au dispositif de soudage-coupage transversal (22), et le produit à emballer (12, 12') étant évacué ensuite sur un dispositif de transport de sortie (35) depuis le dispositif de soudage-coupage transversal (22), une vitesse du dispositif de soudage-coupage transversal continu (22) et une vitesse du dispositif de transport de sortie (35) étant régulées par rapport à une vitesse du dispositif de transport d'entrée (50), **caractérisé en ce que** le produit à emballer (12, 12') est transporté par rapport à la direction de transport (T) après un dispositif de soudage-coupage transversal (22) jusqu'à deux dispositifs de soudage-coupage longitudinal (24, 24') ; **en ce que** le dispositif de soudage-coupage transversal (22) est déplacé parallèlement à la direction de transport (T) entre un point d'entrée (32) situé en amont par rapport à la direction de transport (T) et un point de sortie (33) situé en aval, le dispositif de soudage-coupage transversal (22) adoptant sa position de départ dans le point de sortie (33) ; et **en ce qu'**en outre, une distance réelle entre un produit à emballer (12) et un produit à emballer suivant (12') est détectée, et, si la distance réelle est supérieure à une distance de consigne, la vitesse du dispositif de soudage-coupage transversal continu (22) et la vitesse du dispositif de transport de sortie (35) sont réduites de telle sorte que la distance de consigne s'établisse entre le produit à emballer (12) disposé sur le dispositif de transport de sortie (35) et le produit à emballer suivant (12') disposé sur le dispositif de transport d'entrée (50).

10. Procédé selon la revendication 9, **caractérisé en ce que** la vitesse du dispositif de soudage-coupage transversal continu (22) et/ou la vitesse du dispositif de transport de sortie (35) sont régulées, **en ce qu'**une valeur de vitesse absolue respective est abaissée et une allure respective caractéristique de la vitesse est conservée.

11. Procédé selon la revendication 9 ou 10, **caractérisé en ce que** des courbes de vitesses dépendant d'une distance de consigne entre un produit à emballer (12) et un produit à emballer suivant (12') et d'une distance réelle entre le produit à emballer (12) et le produit à emballer suivant (12'), sont appelées pour la vitesse du dispositif de soudage-coupage transversal continu (22) et/ou pour la vitesse du dispositif de transport de sortie (35), afin d'ajuster la distance réelle à la distance de consigne.

12. Procédé selon l'une quelconque des revendications 9 à 11, **caractérisé en ce que** dans le cas d'une régulation du dispositif de soudage-coupage transversal (22), seulement une valeur de vitesse absolue de la vitesse du dispositif de soudage-coupage transversal continu (22) est réduite lors d'un déplacement du dispositif de soudage-coupage transversal continu (22) dans le sens inverse de la direction de transport (T).

13. Procédé selon l'une quelconque des revendications 9 à 12, **caractérisé en ce que** la vitesse du dispositif de soudage-coupage transversal (22) et la vitesse du dispositif de transport de sortie (35) sont réduites à zéro pour une période de temps prédéfinie, si la distance réelle entre un produit à emballer (12) et un produit à emballer suivant (12') est supérieure ou égale au double de la distance de consigne entre le produit à emballer (12) et le produit à emballer suivant (12').

Fig.1

Fig.2

Fig.3

21

Fig.4a

Fig.4b

Fig.4c

Fig.4d

Fig. 5

100

101

START

102

104

106

108

110

112

114

ENDE

116

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006001594 A1
- DE 19822837 C1
- EP 0537844 A1
- EP 2103521 A2
- WO 9631397 A1
- US 4537016 A
- US 5653085 A
- US 5365859 A